# EUROPEAN PATENT SPECIFICATION

(11) **EP 3 317 352 B1**
(45) Date of publication and mention of the grant of the patent: **03.04.2019**
(21) Application number: 16734850.7
(22) Date of filing: 24.06.2016
(51) Int. Cl.: C08L 83/10

(54) **COMPATIBILIZED COMPOSITIONS, ARTICLES FORMED THEREFROM, AND METHODS OF MANUFACTURE THEREOF**
KOMPATIBILISIERTE ZUSAMMENSETZUNGEN, DARAUS GEFORMTE ARTIKEL UND VERFAHREN ZUR HERSTELLUNG DAVON
COMPOSITIONS COMPATIBILISÉES, ARTICLES FORMÉS À PARTIR D'ELLES, ET LEURS PROCÉDÉS DE FABRICATION

(30) Priority: 30.06.2015 US 201562186457 P
(43) Date of publication of application: 09.05.2018
(73) Proprietor: SABIC Global Technologies B.V., 4612 PX Bergen op Zoom (NL)
(72) Inventor: ZHOU, Hao, Mt. Vernon, Indiana 47620-9367 (US); CAO, Feng, Selkirk, New York 12158 (US); VAN DER MEE, Mark Adrianus Johannes, 4612 PX Bergen op Zoom (NL); ASSINK, Roland Sebastian, 4612 PX Bergen op Zoom (NL); VAN DE GRAMPEL, Robert Dirk, 4612 PX Bergen op Zoom (NL); WIRTZ, Remco, 4612 PX Bergen op Zoom (NL)
(74) Representative: Office Freylinger
(86) International application number: PCT/US2016/039197
(87) International publication number: WO 2017/003846

(56) References cited:
- US-A1- 2013 150 507

## Description

### BACKGROUND

This disclosure is directed to compatibilized thermoplastic compositions, articles formed therefrom, and their methods of manufacture, and in particular compatibilized compositions with advantageous properties such as improved impact strength.

Polyetherimides and polycarbonates are useful in a wide variety of applications at least in part because of their good balance of properties, such as moldability, heat resistance and impact properties, among others. Despite extensive research on these materials over the years, there still remains a need in the art for improved thermoplastic compositions that meet increasingly stringent industry standards.

US 2013/150507 discloses a miscible, high flow composition comprising 80 to 99 wt % of a polyphenylene ether sulfone and 1 to 20wt % of an aryl polyester carbonate copolymer, based on the combined weight of the polyphenylene ether sulfone and the aryl polyester carbonate copolymer.

For example, polyetherimides are known as outstanding high performance materials, having a high glass transition temperature (Tg), and high modulus and strength at elevated temperatures, as well as excellent chemical resistance. However, polyetherimides have a natural amber color with a yellowness index that can be greater than 50. This limits its colorability to dark or fairly light colors, but not to very light colors such as bright white colors. Further, the loading level of white pigment needed to achieve even fairly light color results in deterioration of mechanical properties especially poor notched-impact strength at room temperatures. Lower heat materials such as polycarbonates, poly(carbonate-ester)s, and poly(carbonate-siloxanes) have excellent colorability, high impact strength, and very good flow properties, but are not compatible with polyetherimides. Thus, it is particularly challenging to develop materials that retain the properties of polyetherimides, including chemical resistance, high flow, and high impact, but that can be manufactured as light-colored or white materials without comprising these desirable properties.

### SUMMARY

Disclosed herein is a thermoplastic composition comprising, based on the total weight of the thermoplastic composition, 10 to 50 wt.% of a poly(arylene ether-sulfone), or a combination comprising a poly(arylene ether-sulfone) and a poly(etherimide); 35 to 90 wt.% of a poly(carbonate-siloxane), 0.5 to 25 wt.% of a poly(carbonate-arylate ester) compatibilizer, a poly(carbonate-arylate ester-siloxane) compatibilizer, or a combination comprising at least one of the foregoing, and up to 15 wt.% of an ultraviolet light stabilizer; wherein a sample of the composition has a notched Izod impact energy of at least 200 J/m at 23°C measured in accordance to ASTM D256; and a 40% higher notched Izod impact energy value compared to the composition without the compatibilizer component measured in accordance to ASTM D256.

In yet another embodiment, an article comprises the above-described thermoplastic composition. The article is selected from a molded article, a thermoformed article, an extruded film, an extruded sheet, a foamed article, one or more layers of a multi-layer article, a substrate for a coated article, and a substrate for a metallized article.

In still another embodiment, a method of manufacture of an article comprises molding, extruding, 3D printing, thermoforming, compression molding or shaping the above-described thermoplastic composition into an article.

The above described and other features are exemplified by the following drawings, detailed description, examples, and claims.

### DETAILED DESCRIPTION

The inventors hereof have discovered thermoplastic compositions that have a novel combination of properties. The compositions comprise a polysulfone, or a combination of a polysulfone and a polyetherimide; a poly(carbonate-siloxane); and a polycarbonate-based compatibilizer. In an important feature, the compatibilizer is a poly(carbonate-arylate ester), a poly(carbonate-arylate ester-siloxane), or a combination comprising at least one of the foregoing. Use of these compounds as a compatibilizer allows the manufacture of compositions having an unexpectedly improved combination of properties, including excellent impact properties, improved elongation at break, and tensile strength retention after exposure to a variety of solvents. This result is particularly unexpected because lower heat materials such as polycarbonates, poly(carbonate-ester)s, and poly(carbonate-siloxanes) have poor resistance to harsh chemical reagents, and can thus be susceptible to environmental stress cracking, poor ultraviolet light (UV) resistance, particularly for light colors, and have relatively lower strength and modulus compared to polyetherimides.

The individual components of the compositions are described in more detail below.

A "poly(arylene ether-sulfone)" as used herein refers to polymers having a backbone of formula (1)

-Ar¹-SO₂-Ar²-O- (1)

wherein each Ar¹ and Ar² is the same or different, and is group of formula (2) 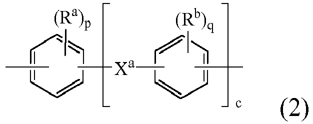 wherein c is 0 or 1, R^{a} and R^{b} are each independently a linear or branched C₁₋₁₀ alkyl, linear or branched C₂₋₁₀ alkenyl, linear or branched C₂₋₁₀ alkynyl, C₆₋₁₈ aryl, C₇₋₂₀ alkylaryl, C₇₋₂₀ arylalkyl, C₅₋₁₀ cycloalkyl, C₅₋₂₀ cycloalkenyl, linear or branched C1-10 alkylcarbonyl, C₆₋₁₈ arylcarbonyl, halogen, nitro, cyano, a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (2), X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In an embodiment, c is 0 or 1, p and q is each 0, and X^{a} is isopropylidene.

Specific poly(arylene ether-sulfone)s that can be used include polyethersulfone (also known as "PES" or "PESU"), which contains at least 85 wt.% of units of formula (1a) 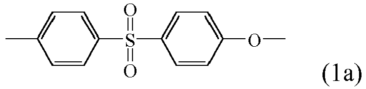 or polyphenylene sulfone (also known as "PPSU) "), which contains at least 85 wt.% of units of formula (1b) 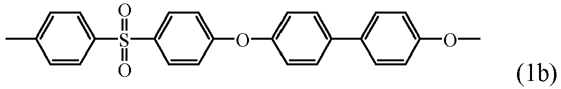 or polyetherethersulfone, which contains at least 85 wt.% of units of formula (1c) 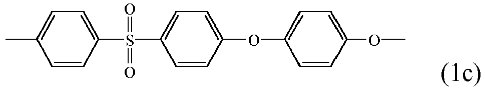 or polysulfone (often referred to as "PSU"), which contains at least 85 wt.% of units of formula (1d) 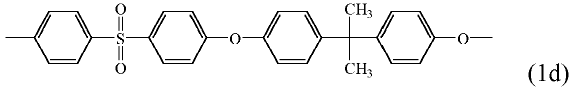 or a combination comprising at least one of the foregoing poly(arylene ether-sulfone)s. Copolymers comprising a combination of at least two types of units of formulas (1a), (1b), (1c), (1d), and (1e) can also be used.

The poly(arylene ether-sulfone)s can be linear or branched, having 1 or more, 2 or more, or 5 or more branching points per 1,000 carbon atoms along the polymer chain. In an embodiment, the poly(phenylsulfone)s are linear, having 10 or fewer, 5 or fewer, 2 or fewer, or 1 or fewer branching points per 1,000 carbon atoms along the polymer chain. In an embodiment, the poly(arylene ether-sulfone)s have a glass transition temperature (Tg) of greater than about 175°C, specifically from about 200°C to about 280°C, and more specifically from about 255 °C to about 275°C. The poly(arylene ether-sulfone)s can further have a weight average molecular weight (Mw) of about 500 to about 100,000 grams/mole (g/mol), specifically about 1,000 to about 75,000 g/mol, more specifically about 1,500 to about 50,000 g/mol, and still more specifically about 2,000 to about 25,000 g/mol.

Exemplary poly(arylene ether-sulfone)s that can be used include those that are available from sources such as Solvay Specialty Polymers, Quadrant EPP, Centroplast Centro, Duneon, GEHR Plastics, Westlake Plastics, and Gharda Chemicals. Commercial grades of poly(phenylsulfone)s include those with the trade names RADEL, UDEL, ULTRASON, and GAFONE. Polyethersulfones are commercially available from Solvay Advanced Polymers K.K. under the trademark of VERADEL, from BASF Corporation under the trademark of ULTRASON, and from Sumitomo Chemical Co., Ltd. under the trademark of SUMIKA EXCEL.

The polyetherimide of the thermoplastic composition comprises more than 1, for example 10 to 1000, or 10 to 500 units of formula (3) 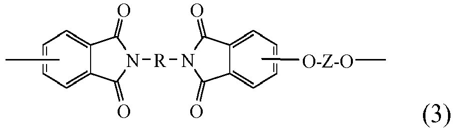 wherein each R is independently the same or different, is a substituted or unsubstituted divalent organic group having 2 to 20 carbon atoms, for example a substituted or unsubstituted aromatic hydrocarbon group having 6 to 20 carbon atoms or a halogenated derivative thereof, a substituted or unsubstituted, straight or branched chain alkylene group having 2 to 20 carbon atoms, a substituted or unsubstituted cycloalkylene groups having 3 to 20 carbon atoms; and Z is an aromatic C₆₋₂₄ monocyclic or polycyclic group optionally substituted with 1 to 6 C₁₋₈ alkyl groups, 1 to 8 halogen atoms, or a combination comprising at least one of the foregoing, provided that the valence of Z is not exceeded.

In an embodiment, R in formula (3) is a divalent group of one of the following formulas, or a combination comprising two or more of the following formulas (collectively referred to as formulas 8): 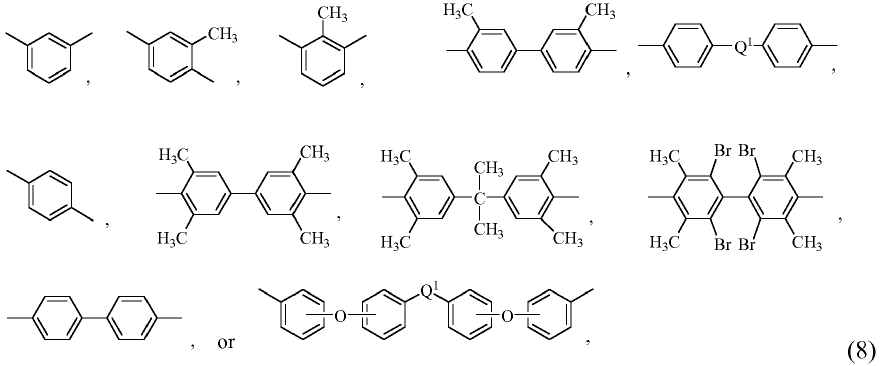 wherein Q¹ is -O-, -S-, -C(O)-, -SO₂-, -SO-, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, at least 10 mole percent of the R groups contain sulfone groups, and in other embodiments no R groups contain sulfone groups.

In a preferred embodiment, each R is independently m-phenylene, p-phenylene, or a divalent group of formula (4) 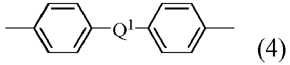 wherein Q¹ is -O-, -S-, -C(O)-, -SO₂-, -SO-, or -C_{y}H_{2y}- wherein y is an integer from 1 to 5 or a halogenated derivative thereof (including a perfluoroalkylene group); and Z a divalent group of formula (5) 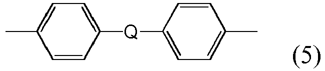 wherein Q is -O-, -S-, -C(O)-, -SO₂-, -SO-, or -C_{y}H_{2y}- wherein y is an integer from 1 to 5.

In specific embodiments, each R is independently m-phenylene, p-phenylene or a diarylene sulfone, in particular bis(4,4'-phenylene)sulfone; and Z is bis(4,4'-phenylene)isopropylidene.

The polyetherimides can have a melt index of 0.1 to 10 grams per minute (g/min), as measured by American Society for Testing Materials (ASTM) D1238 at 340 to 370 °C, using a 6.7 kilogram (kg) weight. In some embodiments, the polyetherimide polymer has a weight average molecular weight (Mw) of 1,000 to 150,000 grams/mole (Dalton), as measured by gel permeation chromatography, using polystyrene standards. In some embodiments the polyetherimide has an Mw of 10,000 to 80,000 Daltons. Such polyetherimide polymers typically have an intrinsic viscosity greater than 0.2 deciliters per gram (dl/g), or, more specifically, 0.35 to 0.7 dl/g as measured in m-cresol at 25°C.

The poly(carbonate-siloxane) ((also referred to as "PC-siloxane" or "PC-Si") are compounds comprising repeating carbonate units and repeating siloxane units. The carbonate units are preferably bisphenol carbonate units of formula (6) 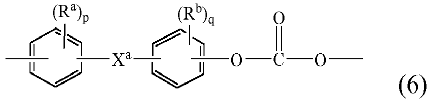 wherein R^{a} and R^{b} are each independently C₁₋₁₂ alkyl, C₁₋₁₂ alkenyl, C₃₋₈ cycloalkyl, or C₁₋₁₂ alkoxy, p and q are each independently 0 to 4, and X^{a} is a bridging group between the two arylene groups, and is a single bond, -O-, -S-, -S(O)-, -S(O)₂-, -C(O)-, a C₁₋₁₁ alkylidene of the formula -C(R^{c})(R^{d})- wherein R^{c} and R^{d} are each independently hydrogen or C₁₋₁₀ alkyl, or a group of the formula -C(=R^{e})- wherein R^{e} is a divalent C₁₋₁₀ hydrocarbon group. Exemplary X^{a} groups include methylene, ethylidene, neopentylidene, and isopropylidene. The bridging group X^{a} and the carbonate oxygen atoms of each C₆ arylene group can be disposed ortho, meta, or para (specifically para) to each other on the C₆ arylene group.

In a specific embodiment, R^{a} and R^{b} are each independently a C₁₋₃ alkyl group, p and q are each independently 0 to 1, and X^{a} is a single bond, -O-, -S(O)-, -S(O)₂-, -C(O)-, a C₁₋₉ alkylidene of formula -C(R^{c})(R^{d})- wherein R^{c} and R^{d} are each independently hydrogen or C₁₋₈ alkyl, or a group of the formula -C(=R^{e})- wherein R^{e} is a divalent C₁₋₉ hydrocarbon group. In another specific embodiment, R^{a} and R^{b} are each independently a methyl group, p and q are each independently 0 to 1, and X^{a} is a single bond, a C₁₋₇ alkylidene of formula -C(R^{c})(R^{d})- wherein R^{c} and R^{d} are each independently hydrogen or C₁₋₆ alkyl. In an embodiment, p and q is each 1, and R^{a} and R^{b} are each a C₁₋₃ alkyl group, specifically methyl, disposed meta to the oxygen on each ring. The bisphenol carbonate units (6) can be derived from bisphenol A, where p and q are both 0 and X^{a} is isopropylidene.

The bisphenol carbonate units (6) are generally produced from the corresponding bisphenol compounds of formula (7) 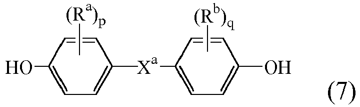 wherein R^{a} and R^{b}, p and q, and X^{a} are the same as in formula (6). Some illustrative examples of bisphenol compounds that can be used are described, for example, in WO 2013/175448 A1, US 2014/0295363, and WO 2014/072923. Specific bisphenol compounds include 2,2-bis(4-hydroxyphenyl) propane ("bisphenol A" or "BPA", in which in which each of A¹ and A² is p-phenylene and Y¹ is isopropylidene in formula (3)), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxy-3-methylphenyl)-3,3,5-trimethylcyclohexane (isophorone bisphenol).

The poly(carbonate-siloxane) copolymers further contain repeating siloxane units (also known as "diorganosiloxane units"). The siloxane units can be polysiloxane units of formula (9) 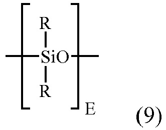 wherein each R is independently a C₁₋₁₃ monovalent hydrocarbyl group. For example, each R can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination comprising at least one of the foregoing. In an embodiment no halogens are present. Combinations of the foregoing R groups can be used in the same copolymer. In an embodiment, the polysiloxane comprises R groups that have minimal hydrocarbon content. In a specific embodiment, an R group with a minimal hydrocarbon content is a methyl group.

The average value of E in formula (9) can vary widely depending on the type and relative amount of each component in the polycarbonate composition, whether the polymer is linear, branched or a graft copolymer, the desired properties of the composition, and like considerations. In an embodiment, E has an average value of 2 to 500, 2 to 200, or 5 to 120, 10 to 100, 10 to 80, 2 to 30, or 30 to 80. In an embodiment E has an average value of 16 to 50, more specifically 20 to 45, and even more specifically 25 to 45. In another embodiment, E has an average value of 4 to 50, 4 to 15, specifically 5 to 15, more specifically 6 to 15, and still more specifically 7 to 10. In an embodiment, the polysiloxane units are structural units of formula (9a) 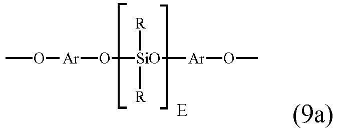 wherein E is as defined above; each R can independently be the same or different, and is as defined above; and each Ar can independently be the same or different, and is a substituted or unsubstituted C₆₋₃₀ compound containing an aromatic group, wherein the bonds are directly connected to the aromatic moiety. The Ar groups in formula (9a) can be derived from a C₆₋₃₀ dihydroxy aromatic compound, for example a bisphenol compound as described above or a monoaryl dihydroxy compound (6) above. Combinations comprising at least one of the foregoing dihydroxy aromatic compounds can also be used. Exemplary dihydroxy aromatic compounds are resorcinol (i.e., 1,3-dihydroxybenzene), 4-methyl-1,3-dihydroxybenzene, 5-methyl-1,3-dihydroxybenzene, 4,6-dimethyl-1,3-dihydroxybenzene, 1,4-dihydroxybenzene, 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used. In an embodiment, the dihydroxy aromatic compound is unsubstituted, or is does not contain non-aromatic hydrocarbyl substituents such as alkyl, alkoxy, or alkylene substituents.

In a specific embodiment, where Ar is derived from resorcinol, the polysiloxane units are of the formula (9a-1) 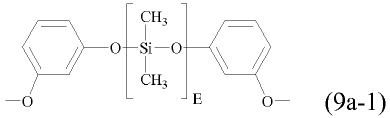 or, where Ar is derived from bisphenol A, the polysiloxane has the formula (9a-2) 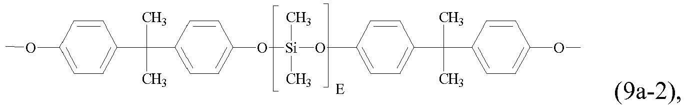 or a combination comprising at least one of the foregoing can be used, wherein E has an average value as described above, specifically an average value of 2 to 200.

In another embodiment, polydiorganosiloxane units are units of formula (9b) 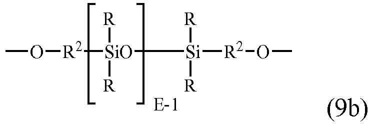 wherein R and E are as described for formula (9), and each R² is independently a C₁₋₃₀ or C₂₋₁₄ hydrocarbylene group, for example, a divalent C₁₋₃₀ alkylene or C₇₋₃₀ arylene-alkylene. In a specific embodiment, where R² is C₇₋₃₀ arylene-alkylene, the polydiorganosiloxane units are of formula (9b-1) 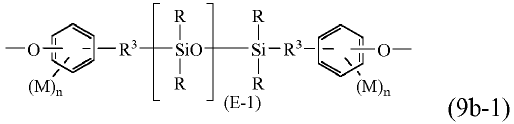 wherein R and E are as defined for formula (9), and each R³ is independently a divalent C₂₋₈ aliphatic group. Each M in formula (25) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy group, C₃₋₈ cycloalkyl, C₃₋₈ cycloalkoxy, C₆₋₁₀ aryl, C₆₋₁₀ aryloxy, C₇₋₁₂ arylalkyl, C₇₋₁₂ arylalkoxy, C₇₋₁₂ alkylaryl, or C₇₋₁₂ alkylaryloxy, wherein each n is independently 0, 1, 2, 3, or 4. In an embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R³ is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is 0 or 1, R³ is a divalent C₁₋₃ aliphatic group, and R is methyl. The foregoing poly(carbonate-siloxane) copolymers can be manufactured by the methods described in U.S. 6,072,011 to Hoover, for example.

In a specific embodiment, the polysiloxane units are eugenol-capped polysiloxane units of formula (9b-2) 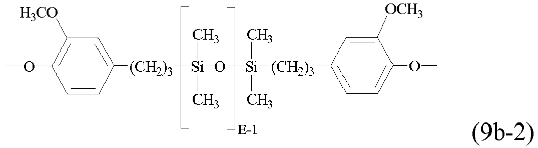 where E has an average value as described above, specifically 2 to 200, 2 to 100, 2 to 90, 2 to 80, or 2 to 30, 20 to 20, or 30 to 80. In another specific embodiment, the polysiloxane units are of formula (9b-3) or (9b-4) 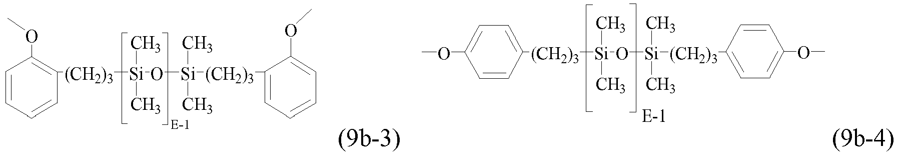 where E has an average value as defined above, specifically an average value of 2 to 200, 2 to 100, 2 to 90, 2 to 80, or 2 to 30, 20 to 20, or 30 to 80.

The relative amount of carbonate units (6) and polysiloxane units (9) in the PC-siloxane copolymers depends on the desired properties of the polycarbonate composition, such as impact, property retention, and melt viscosity. In particular the polycarbonate copolymer is selected to have an average value of E that provides good impact and/or transparency properties, as well as to provide the desired weight percent of siloxane units in the polycarbonate composition. For example, the polycarbonate copolymers can comprise siloxane units in an amount of 0.1 to 60 weight percent (wt.%), specifically 0.5 to 55 wt.%, or 0.5 to 45 wt.%, based on the total weight of the polymers in the polycarbonate composition, with the proviso that the siloxane units are provided by polysiloxane units covalently bonded in the polymer backbone of the polycarbonate copolymer.

A specific PC-siloxane comprises carbonate units (6) derived from bisphenol A, and second repeating siloxane units (9b-2), (9b-3), (9b-4), or a combination comprising at least one of the foregoing, specifically (9b-2). This polycarbonate copolymer can comprise the siloxane units in an amount of 0.1 to 60 weight percent (wt.%), 0.5 to 55 wt.%, 0.5 to 45 wt.% 0.5 to 30 wt.%, or 0.5 to 20 wt.%, based on the total weight of the polycarbonate copolymer, with the proviso that the siloxane units are covalently bound to the polymer backbone of the polycarbonate copolymer. In an embodiment, the remaining units are bisphenol units (6). Transparency can be achieved in this embodiment when E has an average value of 4 to 50, 4 to 15, specifically 5 to 15, more specifically 6 to 15, and still more specifically 7 to 10. The transparent PC-siloxanes can be manufactured using one or both of the tube reactor processes described in U.S. Patent Application No. 2004/0039145A1 or the process described in U.S. Patent No. 6,723,864 may be used to synthesize the poly(siloxane-carbonate) copolymers.

These and other methods for the manufacture of the PC-siloxane copolymers are known. The PC-siloxane copolymers can have an intrinsic viscosity, as determined in chloroform at 25°C, of 0.3 to 1.5 deciliters per gram (dl/g), specifically 0.45 to 1.0 dl/g. The PC-siloxane copolymers can have a weight average molecular weight (M_{w}) of 10,000 to 100,000 g/mol, as measured by gel permeation chromatography (GPC) using a cross linked styrene-divinyl benzene column, at a sample concentration of 1 milligram per milliliter, and as calibrated with Bisphenol A polycarbonate standards.

In an embodiment, the poly(carbonate-arylate ester) is a poly(bisphenol A carbonate)-co-(bisphenol A-phthalate-ester) of formula (10) 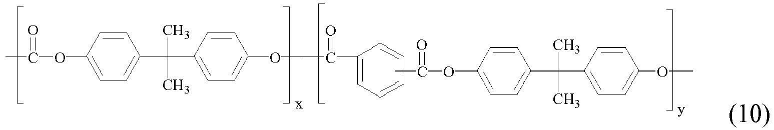 wherein y and x represent the weight percent of arylate-bisphenol A ester units and bisphenol A carbonate units, respectively. Generally, the units are present as blocks. In an embodiment, the weight percent of ester units y to carbonate units x in the copolymers is 50:50 to 99:1, or 55:45 to 90:10, or 75:25 to 95:5. Copolymers of formula (10) comprising 35 to 45 wt.% of carbonate units and 55 to 65 wt.% of ester units, wherein the ester units have a molar ratio of isophthalate to terephthalate of 45:55 to 55:45 are often referred to as poly(carbonate-ester)s (PCE) and copolymers comprising 15 to 25 wt.% of carbonate units and 75 to 85 wt.% of ester units having a molar ratio of isophthalate to terephthalate from 98:2 to 88:12 are often referred to as poly(phthalate-carbonate)s (PPC).

The poly(carbonate-arylate ester) comprise bisphenol carbonate units (6) and monoaryl arylate ester units of formula (11) 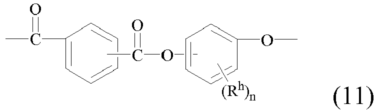 wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. Specifically, each R^{h} is independently a C₁₋₄ alkyl, and n is 0 to 3, 0 to 1, or 0. Specifically, the monoaryl-arylate ester unit (11) is derived from the reaction of a combination of isophthalic and terephthalic diacids (or derivatives thereof) with resorcinol (or reactive derivatives thereof) to provide isophthalate-terephthalate-resorcinol ("ITR" ester units) of formula (11a) 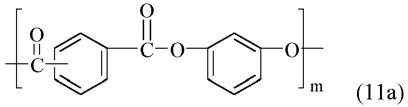 wherein m is 4 to 100, 4 to 90, 5 to 70, more specifically 5 to 50, or still more specifically 10 to 30. In an embodiment, the ITR ester units are present in the polycarbonate copolymer in an amount greater than or equal to 95 mol%, specifically greater than or equal to 99 mol%, and still more specifically greater than or equal to 99.5 mol% based on the total moles of ester units in the copolymer.

The poly(carbonate-arylate ester-siloxane) comprises repeating bisphenol carbonate units (6), repeating arylate ester units (11), and repeating siloxane units (9).

More specifically, the poly(carbonate-arylate ester-siloxane) copolymers comprise bisphenol-A carbonate units, ITR ester units (10a), and siloxane units (9), specifically dimethylsiloxane units. For convenience, these polymers, poly(bisphenol-A carbonate)-co-poly(isophthalate-terephthalate-resorcinol ester)-co-poly(siloxane), can be referred to herein as poly(bisphenol A-ITR-dimethylsiloxane)" copolymers.

The relative mount polysiloxane units (9) in the poly(carbonate-arylate ester-siloxane) depends on the desired properties of the thermoplastic composition, such as impact, property retention, color, and melt viscosity. In particular the poly(carbonate-arylate ester-siloxane) is selected to have an average value of E that provides good impact and/or transparency properties, as well as to provide the desired weight percent of siloxane units in the thermoplastic composition. For example, the poly(carbonate-arylate ester-siloxane)s can comprise siloxane units in an amount of 0.3 to 30 weight percent (wt.%), specifically 0.5 to 25 wt.%, or 0.5 to 15 wt.%, based on the total weight of the polymers in the thermoplastic composition, with the proviso that the siloxane units are provided by polysiloxane units covalently bonded in the polymer backbone of the poly(carbonate-arylate ester).

In an embodiment, the poly(carbonate-arylate ester-siloxane) comprise 1 to 40 mol%, or 1 to 20 mol% of bisphenol-A carbonate units, 50 to 95 mol% of ITR ester units (11a), and an amount of polysiloxane units (9b), specifically (9b-1), even more specifically (9b-2), (9b-3), (9b-4) or a combination comprising at least one of the foregoing (specifically of formula 9b-2) in an amount effective to provide 0.1 to 10 wt.% of siloxane units, each based on the total copolymer. For example, the poly(carbonate-arylate ester-siloxane) can comprise 1 to 20 mol% of bisphenol-A carbonate units, 60 to 90 mole% of ITR ester units, and an amount of polysiloxane units (9b-2), (9b-3), (9b-4) or a combination comprising at least one of the foregoing (specifically of formula 9b-2) effective to provide 0.1 to 10 wt.% of siloxane units, each based on the total copolymer.

In a specific embodiment, the composition further comprises a fluoropolymer, selected to provide additional chemical resistance. The fluoropolymer can be a fluorinated homopolymer or copolymer. In an embodiment, the fluoropolymer is a polymer of tetrafluoroethylene, vinylidene fluoride, vinyl fluoride, perfluoroether, perfluoropropylene vinyl ether, chlorotrifluoroethylene, or a combination comprising at least one of the foregoing. When a comonomer is present, the comonomer can be, for example, perfluoromethyl vinyl ether, perfluoropropylene vinyl ether, hexafluoropropylene, perfluorobutyl ethylene, ethylene, propylene, butylene, or a combination comprising at least one of the foregoing. Specific fluoropolymers are polytetrafluoroethylene (PTFE), polychlorotrifluoroethylene (PCTFE), polyvinylidene fluoride, polyvinyl fluoride, tetrafluoroethylene-perfluoroproplyene vinyl ether copolymer (also known as PFA), tetrafluoroethylene-hexafluoropropylene copolymer, and tetrafluoroethylene-ethylene copolymer. A combination comprising at least one of the foregoing homopolymers and copolymers can be used. PTFE is preferred. The fluoropolymer is present in an amount effective to provide improved chemical resistance, without significantly adversely affect the desired properties of the thermoplastic composition, in particular impact, tensile property retention, colorability, and flow. For example, the fluoropolymer can be present in an amount of 0.1 to 5 wt.%, specifically 0.5 to 3 wt.%, based on the total weight of the composition. It has further been found that the presence of a fluoropolymer, and in particular PTFE, can improve the chemical resistance of compositions comprising, based on the total weight of the thermoplastic composition, 10 to 50 wt.% of a poly(etherimide), 35 to 90 wt.% of a poly(carbonate-siloxane), 0.5 to 25 wt.% of a poly(carbonate-arylate ester), a poly(carbonate-arylate ester-siloxane) compatibilizer, or a combination comprising at least one of the foregoing, and up to 15 wt.% of an ultraviolet light stabilizer.

The thermoplastic compositions can include various other polymers to adjust the properties of the thermoplastic compositions, with the proviso that the other polymers are selected so as to not adversely affect the desired properties of the thermoplastic composition significantly, in particular impact, tensile property retention, colorability, and flow. For example, a combination of a polycarbonate-siloxane as described above and a homopolycarbonate having repeating units (6) such as carbonate units derived from bisphenol A can be used. Other polymers include an impact modifier such as natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR) silicone elastomers, and elastomer-modified graft copolymers such as styrene-butadiene-styrene (SBS), styrene-butadiene rubber (SBR), styrene-ethylene-butadiene-styrene (SEBS), acrylonitrile-butadiene-styrene (ABS), acrylonitrile-ethylene-propylene-diene-styrene (AES), styrene-isoprene-styrene (SIS), methyl methacrylate-butadiene-styrene (MBS), high rubber graft (HRG), and the like can be present. In general such other polymers provide less than 50 wt.%, less than 40 wt.%, less than 30 wt.%, less than 20 wt.%, or less than 10 wt.% of the total composition. In an embodiment, no other polymers are present. In a specific embodiment, no polymers containing halogen are present in the thermoplastic compositions.

The thermoplastic compositions can include various additives ordinarily incorporated into flame retardant compositions having good impact and appearance, with the proviso that the additive(s) are selected so as to not adversely affect the desired properties of the thermoplastic composition significantly, in particular impact, tensile property retention, colorability, and flow. Such additives can be mixed at a suitable time during the mixing of the components for forming the composition. Exemplary additives include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, additional flame retardants, and anti-drip agents. A combination of additives can be used. In general, the additives are used in the amounts generally known to be effective. The total amount of additives (other than any filler or reinforcing agents) is generally 0.01 to 25 parts per hundred parts of the polymers in the composition by weight (PHR).

The use of pigments such as titanium dioxide produces white compositions, which are commercially desirable. It has surprisingly been found that the use of titanium dioxide can further improve tensile property retention. Pigments such as titanium dioxide (or other mineral fillers) can be present in the thermoplastic compositions in amounts of 0.1 to 30 wt.%, 0.5 to 25 wt.%, 1 to 20 wt.%, or 5 to 15 wt.%, each based on the total weight of the composition.

The composition can have any suitable color including white, light gray, and/or combinations thereof. The white or light gray color can exhibit an L* value greater than or equal to 80. A composition having a white or light gray color can comprise an amount of titanium dioxide in amounts of 0.1 to 30 wt.%, 0.5 to 25 wt.%, 1 to 20 wt.%, or 5 to 15 wt.%, each based on the total weight of the composition.

The composition can have any suitable color including gray, black, and/or combinations thereof. The gray or black color can exhibit an L* value of below 80. A composition having a gray or black color can comprise an amount of carbon black in an amount of 0.0001 to 10 PHR, for example 0.005 to 7.5 PHR, preferably 0.005 to 5.0 PHR. In a preferred embodiment the amount of carbon black can be 0.005 to 3.0 PHR.

Exemplary antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 1 PHR.

Exemplary heat stabilizer additives include organophosphites such as triphenyl phosphite, tris-(2,6-dimethylphenyl)phosphite, and tris-(mixed mono-and dinonylphenyl)phosphite; phosphonates such as dimethylbenzene phosphonate, phosphates such as trimethyl phosphate; or combinations comprising at least one of the foregoing heat stabilizers. Heat stabilizers are used in amounts of 0.01 to 1 PHR.

Light stabilizers and/or ultraviolet light (UV) absorbing additives, also referred to as UV stabilizers, can also be used. Examples of suitable UV stabilizers can include benzophenones, triazines, benzoxazinones, benzotriazoles, benzoates, formamidines, cinnamates/propenoates, aromatic propanediones, benzimidazoles, cycloaliphatic ketones, formanilides, cyanoacrylates, benzopyranones, salicylates, and combinations comprising at least one of the foregoing.

Light stabilizer additives include benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers.

UV absorbing additives include hydroxybenzophenones; hydroxybenzotriazoles; hydroxybenzotriazines; cyanoacrylates; oxanilides; benzoxazinones; aryl salicylates; monoesters of diphenols such as resorcinol monobenzoate; 2-(2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]-5-(octyloxy)-phenol (CYASORB 1164); 2,2'-(1,4-phenylene)bis(4H-3,1-benzoxazin-4-one) (CYASORB UV-3638); poly[(6-morphilino-s-triazine-2,4-diyl)[2,2,6,6-tetramethyl-4-piperidyl)imino]-hexamethylene[(2,2,6,6-tetramethyl-4-piperidyl)imino], 2-hydroxy-4-octyloxybenzophenone (UVINUL3008), 2-tert-butyl-6-(5-chloro-2H-benzotriazole-2-yl)-4-methylphenyl (UVINUL3026), 2,4-di-tert-butyl-6-(5-chloro-2H-benzotriazole-2-yl)-phenol (UVINUL3027), 2-(2H-benzotriazole-2-yl)-4,6-di-tert-pentylphenol (UVINUL3028), 2-(2H-benzotriazole-2-yl)-4-(1,1,3,3-tetramethylbutyl)-phenol (UVINUL3029), 1,3-bis[(2'cyano-3',3'-diphenylacryloyl)oxy]-2,2-bis-{[(2'-cyano-3',3'-diphenylacryloyl)oxy]methyl}-propane (UVINUL3030), 2-(2H-benzotriazole-2-yl)-4-methylphenol (UVINUL3033), 2-(2H-benzotriazole-2-yl)-4,6-bis(1-methyl-1-phenyethyl)phenol (UVINUL3034), ethyl-2-cyano-3,3-diphenylacrylate (UVINUL3035), (2-ethylhexyl)-2-cyano-3,3-diphenylacrylate (UVINUL3039), N,N'-bisformyl-N,N'-bis(2,2,6,6-tetramethyl-4-piperidinyl)hexamethylendiamine (UVINUL4050H), bis-(2,2,6,6-tetramethyl-4-piperidyl)-sebacate (UVINUL4077H), bis-(1,2,2,6,6-pentamethyl-4-piperdiyl)-sebacate + methyl-(1,2,2,6,6-pentamethyl-4-piperidyl)-sebacate (UVINUL4092H), TINUVIN 234; Tinuvin 360, Tinuvin 1600; nano-size inorganic materials such as titanium oxide, cerium oxide, and zinc oxide, all with particle size less than or equal to 100 nanometers; or the like, or combinations comprising at least one of the foregoing UV absorbers.

UV absorbers that can be particularly useful with the thermoplastic compositions disclosed herein include 2-(2H-benzotriazol-2-yl)-4-(1,1,3,3-tetramethylbutyl)-phenol (e.g., CYASORB 5411 commercially available from Cytec Industries, Inc., Woodland Park, New Jersey) and 2,2'-(1,4-phenylene)bis(4H-3,1-benzoxazin-4-one) (e.g., CYASORB UV- 3638, commercially available from Cytec Industries, Inc., Woodland Park, New Jersey), and combinations comprising at least one of the foregoing. In another embodiment, the UV stabilizer comprises 2,2'-methylenebis(6-(2H-benzotriazol-2-yl)-4-(1,1,3,3,-tetramethylbutyl)phenol, available as LA-31RG, or TINUVIN 360 having a CAS 103597-45-1; and 2,2'-(p-phenylene) bis-4H-3,1-Benzoxazin-4-one , available as CYASORB UV-3638, and having CAS:18600-59-4. Alternatively, phenol, 2-(2H-benzotriazol-2-yl)-4,6-bis(1-methyl-1-phenylethyl, -hydroxyphenyl-s-triazine derivative (TINUVIN 1600), 2-(4,6-diphenyl-1,3,5-triazin-2-yl)-5-hexyloxyphenol (CAS No.: 147315-50-2), or 2-(2-hydroxy-3,5-dicumyl)benzotriazole (powder and free flowing) (CAS No.: 70321-86-7) are preferred in white compositions.

The UV stabilizers can be present in an amount of up to 15 wt.%, for example, 0.01 to 10 wt%, specifically, 0.1 to 8 wt%, and more specifically, 1 to 4 wt%, based upon the total weight of the thermoplastic composition.

Methods for forming the thermoplastic compositions can vary. In an embodiment, the polymers are combined (e.g., blended) with any additives (e.g., a mold release agent) such as in a screw-type extruder. The polymers any additives can be combined in any order, and in form, for example, powder, granular, filamentous, as a masterbatch, and the like. The thermoplastic compositions can be foamed, extruded into a sheet, or optionally pelletized. Methods of foaming a thermoplastic composition using frothing or physical or chemical blowing agents are known and can be used. The pellets can be used for molding into articles, foaming, or they can be used in forming a sheet of the flame retardant thermoplastic composition. In some embodiments, the composition can be extruded (or co-extruded with a coating or other layer) in the form of a sheet and/or can be processed through calendaring rolls to form the desired sheet.

As discussed above, the thermoplastic compositions are formulated to achieve an improved combination of properties, including excellent impact properties, improved elongation at break, and tensile strength retention after exposure to a variety of solvents. The relative amounts of poly(etherimide), poly(arylene ether-sulfone), poly(carbonate-siloxane), and the compatibilizer in the thermoplastic compositions depends on the particular polymers, the targeted impact, and other desired properties of the thermoplastic composition, such as impact, tensile property retention, colorability, and flow.

In an embodiment, the thermoplastic compositions comprise, based on the total weight of the compositions, 10 to 50 wt.% poly(arylene ether-sulfone) and/or poly(etherimide) (preferably poly(arylene ether-sulfone) or a combination of poly(arylene ether-sulfone) and poly(etherimide)), 35 to 90 wt.% poly(carbonate-siloxane), and 0.5 to 25 wt.% of the compatibilizer; preferably 10 to 40 wt.% poly(arylene ether-sulfone) and/or poly(etherimide) (preferably poly(arylene ether-sulfone) or a combination of poly(arylene ether-sulfone) and poly(etherimide)), 40 to 75 wt.% poly(carbonate-siloxane), and 5 to 20 wt.% of the compatibilizer; most preferably 10 to 40 wt.% poly(arylene ether-sulfone) or a combination of poly(arylene ether-sulfone) and poly(etherimide), 40 to 75 wt.% poly(carbonate-siloxane), and 5 to 20 wt.% of the compatibilizer

In another embodiment, the thermoplastic compositions comprise, based on the total weight of the compositions, 10 to 45 wt.% poly(etherimide), 35 to 90 wt.% poly(carbonate-siloxane), and 0.5 to 25 wt.% of the compatibilizer, preferably, 20 to 45 wt.% poly(etherimide), 40 to 75 wt.% poly(carbonate-siloxane), and 5 to 20 wt.% of the compatibilizer. In this embodiment, a fluoropolymer such as PTFE and/or a matting agent can be present.

The thermoplastic compositions can further have good melt viscosities, which aid processing. The thermoplastic compositions can have a melt volume flow rate (MVR, cubic centimeter per 10 minutes (cc/10 min) of 4 to about 30, greater than or equal to 6, greater than or equal to 8, greater than or equal to 10, greater than or equal to 12, greater than or equal to 14, greater than or equal to 16, greater than or equal to 18, or greater than or equal to 20 cc/min, measured at 300°C/ 1.2 Kg at 360 second dwell according to ISO 1133. The same or similar values can be obtained in articles having a wide range of thicknesses, for example from 0.1 to 10 mm, or 0.5 to 5 mm.

The thermoplastic compositions can further have a Notched Izod Impact (NII) of 100 to 900 J/m, measured at 23°C using 1/8-inch thick bars (3.18 mm) in accordance with ASTM D256-2010.

The thermoplastic compositions can have a 40% higher notched Izod impact energy value compared to the composition without the compatibilizer component as measured by ASTM D256.

The thermoplastic compositions can further have a ductility of 20 to 100%, measured in accordance with ASTM 256-2010.

The thermoplastic compositions can have a gloss at least 5%, at least 10%, or at least 20% greater than the same compositions without the compatibilizer, as determined at a 60 ° angle.

The thermoplastic compositions can have a tensile yield stress retention and nominal strain at break retention of 40% or higher after exposure of an ASTM tensile bar for 24 hours at 23°C to sunscreen under 0.5% strain as measured by ASTM D256.

The thermoplastic compositions can have a tensile yield stress retention and nominal strain at break retention of 40% or higher after exposure of an ASTM tensile bar for 24 hours at 23°C to oleic acid under 0.5% strain as measured by ASTM D256.

The thermoplastic compositions can have a tensile yield stress retention and nominal strain at break retention of 40% or higher after exposure of an ASTM tensile bar for 24 hours at 23°C to sebum under 0.5% strain as measured by ASTM D256.

Preferably, the thermoplastic compositions have a notched Izod impact of greater than or equal to(ASTM) 120 J/m , measured at 23°C to -30°C, according to ISO 180/1A using multipurpose 4.0 mm test specimen in accordance with ISO 3167 TYPE A, and a tensile yield stress retention and nominal strain at break retention of 40% or higher after exposure of an ASTM tensile bar for 24 hours at 23°C to Sunscreen under 1% strain as measured by ASTM D256 and to oleic acid and sebum under 0.5% strain as measured by ASTM D256.

The thermoplastic composition is able to be metallized with a metal such as, but not limited to aluminum, preferably wherein the aluminum is deposited and anodized to provide desirable characteristics such as corrosion resistance and wear resistance, better adhesion to paints and dyes vs. bare metal.

Most polymeric materials may not survive the various mechanical/chemical treatments (such as, but not limited to, pre-treatment, etching, milling, desmutting, anodizing, coloring, sealing) on the plastic material typically involved during the anodization process.

Advantageously, the thermoplastic composition is able to endure the anodization process by maintaining its properties and structural integrity.

The anodization processes are not particularly limited. In an embodiment, preceding the anodization process, wrought alloys are cleaned in either a hot soak cleaner or in a solvent bath and may be etched in sodium hydroxide (normally with added sodium gluconate), ammonium bifluoride or brightened in a mix of acids. Cast alloys are normally best just cleaned due to the presence of intermetallic substances unless they are a high purity alloy such as LM0.

The anodized aluminium layer is grown by passing a direct current through an electrolytic solution, with the aluminium object serving as the anode (the positive electrode). The current releases hydrogen at the cathode (the negative electrode) and oxygen at the surface of the aluminium anode, creating a build-up of aluminium oxide. Alternating current and pulsed current is also possible but rarely used. The voltage required by various solutions may range from 1 to 300 V DC, although most fall in the range of 15 to 21 V. Higher voltages are typically required for thicker coatings formed in sulfuric and organic acid. The anodizing current varies with the area of aluminium being anodized, and typically ranges from 30 to 300 amperes/meter² (2.8 to 28 ampere/ft2).

Aluminium anodizing is usually performed in an acid solution which slowly dissolves the aluminium oxide. The acid action is balanced with the oxidation rate to form a coating with nanopores, 10-150 nm in diameter. These pores are what allow the electrolyte solution and current to reach the aluminium substrate and continue growing the coating to greater thickness beyond what is produced by autopassivation. However, these same pores will later permit air or water to reach the substrate and initiate corrosion if not sealed. They are often filled with colored dyes and/or corrosion inhibitors before sealing. Because the dye is only superficial, the underlying oxide may continue to provide corrosion protection even if minor wear and scratches may break through the dyed layer.

Conditions such as electrolyte concentration, acidity, solution temperature, and current must be controlled to allow the formation of a consistent oxide layer. Harder, thicker films tend to be produced by more dilute solutions at lower temperatures with higher voltages and currents. The film thickness can range from under 0.5 micrometers for bright decorative work up to 150 micrometers for architectural applications.

Shaped, formed, or molded articles comprising the thermoplastic compositions are also provided. The thermoplastic compositions can be molded into useful shaped articles by a variety of means such as injection molding, extrusion, rotational molding, blow molding, and thermoforming to form articles. Thus the thermoplastic compositions can be used to form a foamed article, a molded article, a thermoformed article, an extruded film, an extruded sheet, one or more layers of a multi-layer article (e.g., a cap-layer), a substrate for a coated article, or a substrate for a metallized article.

Illustrative articles include access panels, access doors, air flow regulators air gaspers, air grilles, arm rests, baggage storage doors, balcony components, cabinet walls, ceiling panels, door pulls, door handles, duct housing, enclosures for electronic devices, equipment housings, equipment panels, floor panels, food carts, food trays, galley surfaces, grilles, handles, housings for TVs and displays, light panels, magazine racks, telephone housings, partitions, parts for trolley carts, seat backs, seat components, railing components, seat housings, shelves, side walls, speaker housings, storage compartments, storage housings, toilet seats, tray tables, trays, trim panel, window moldings, window slides, windows, and the like.

The above-described compositions, in particular compositions comprising a polyetherimide, poly(carbonate-siloxane) and compatibilizer are useful for the manufacture of components for consumer electronics. One key formulation challenge is retention of color during UV-aging while maintaining a range of other properties such as one or more of heat aging, tensile strength, elongation at break, flame retardance, and flexibility. Compositions having improved color retention are of continuing interest for use in the consumer electronics area. In an embodiment, the compositions are color stable, i.e., the color of the compositions of experience a Delta E after aging of less than 20, less than 10, preferably less than 5 and more preferably less than 3, after 300 hours of exposure to UV radiation, for example according to ASTM D4459.

The compositions can also be high gloss, where gloss may be measured at 60° according to ASTM D523. For example, the compositions comprising polysulfone, optionally a polyetherimide, poly(carbonate-siloxane), and compatibilizer can have a gloss of 60 or greater, or 70 or greater, for example 60 to 80 measured at 60°. A matting agent can be added to lower gloss if desired. It has further been found that a matting agent can reduce the gloss of compositions comprising, based on the total weight of the thermoplastic composition, 10 to 50 wt.% of a poly(etherimide), 35 to 90 wt.% of a poly(carbonate-siloxane), 0.5 to 25 wt.% of a poly(carbonate-arylate ester), and up to 15 wt.% of an ultraviolet light stabilizer, although in some embodiments impact strength is also reduced.

Thus, the compositions containing polysulfone, optionally a polyetherimide, poly(carbonate-siloxane), and compatibilizer, and up to 20 wt.% of titanium dioxide can be used in the manufacture of components of a consumer electronic device, wherein the component is a housing, a frame, a clip, a bezel, a bushing, a flange, a strut, a prong, a fin, or a rib. By consumer electronics device (CED) is meant a cellular phone (e.g., a smartphone), a tablet computer, a laptop computer, a portable media player, a television, a portable gaming device, a gaming console, a gaming controller, a remote control, an appliance (e.g. a toaster, a refrigerator, a bread maker, a microwave, a vacuum cleaner, etc.) a power tool (a drill, a blender, etc.), a robot (e.g. an autonomous cleaning robot, a care giving robot, etc.), a toy (e.g. a doll, a figurine, a construction set, a tractor, etc.), a greeting card, a home entertainment system, an active loudspeaker, a soundbar, or the like.

In another embodiment, the compositions containing polysulfone, optionally a polyetherimide, poly(carbonate-siloxane), and compatibilizer, and up to 25 wt.% of titanium dioxide can be used as an automobile interior component selected from trim, an air outlet, a button, a ventilator, an instrument panel, or a cover.

The thermoplastic compositions are further illustrated by the following nonlimiting examples.

### EXAMPLES

Materials for the following examples are listed in Table 1. Amounts of each component in the Examples are in wt. %, based on the total weight of the composition, unless otherwise indicated.

**Table 1.**

| COMPONENT | CHEMICAL DESCRIPTION | SOURCE |
|---|---|---|
| PC-Si (a) | Polydimethylsiloxane-bisphenol A copolymer, 6 mol% siloxane, having an average block length of 40-50 units, Mw 23,000 g/mol (determined via GPC using BPA polycarbonate standards), manufactured by interfacial polymerization | SABIC |
| PEI | Poly(etherimide) made via reaction of bisphenol-A dianhydride with equimolar amount of m-phenylene diamine, Mw = 31,000 to 35,000 g/mol (determined via GPC using polystyrene standards) | SABIC |
| PC-ITR-Si | Polydimethylsiloxane-ITR (Isophthalic acid-terephthalic acid-resorcinol)-bisphenol-A copolyestercarbonate copolymer, ester content 83 mol%, siloxane content 1 wt% (average siloxane chain length about 10), interfacial polymerization, Mw about 24,500 g/mol, para-cumyl phenol end-capped | SABIC |
| Phosphite | Tris (2,4-di-tert-butylphenyl) phosphite (trade name EVERFOS 168) | Everspring Chemical |
| PPSU | Polyphenylene sulfone (Radel R5100) | Solvay |
| PESU | Polyethersulfone (Veradel 3100) | Solvay |
| PSU | Polysulfone (Udel P-1700) | Solvay |
| PTFE | Poly(tetrafluoroethylene) (POLYMIST F-5) CAS No. 9002-84-0 | Solvay |
| TiO₂ | Coated titanium dioxide (pigment) | Kronos |
| CB | Carbon black pigment | Cabot |
| UVS-1 | CAS No.: 103597-45-1 2,2'-Methylene bis[4-(1,1,3,3 -tetramethylbutyl)-6-(2H-benzotriazole-2-yl)phenol] (Trade name LA-31RG) | ADK |
| UVS-2 | CAS No.: 18600-59-4, 2,2'-(1,4-phenylene)bis-4H-3,1-Benzoxazine-4-one (CYASORB UV-3638 | Cytec |
| SAN-Gel | Gel type additive having 50-60 wt% Styrene acrylonitrile copolymer (SAN) | |
| Silica | Fumed silica (Sipemat 310) | |
| PC-Ester (PPC) | Poly(phthalate-carbonate) copolymer, 81 mol% ester, molecular weight = 28,500 g/mol (determined via GPC using BPA polycarbonate standards), manufactured via interfacial polymerization | Sabic |

The tests performed are summarized in Table 2.

**Table 2.**

| Property | Description | Test | Specimen | Units |
|---|---|---|---|---|
| MFR | Melt flow rate, pellets (dried for 4 hours at 125 °C prior to measurement), dwell time of 360 seconds, load of 6.6 kgf, 295 °C | ASTM D1238-2010 | Pellets | |
| CV | Capillary viscosity (another indicator of melt-flow); dried pellets were extruded through a capillary Rheometer and the force at varied shear rates was determined to estimate the shear viscosity | ASTM D3835 or ISO D11433 | Pellets | |
| | Tensile properties, 23 °C, with a crosshead speed of 5 mm/minutes | ASTM D638 | Injection molded ASTM Tensile bar | |
| INI | Izod Notched Impact, 23 °C , 2 lbf/ft pendulum energy | ASTM D256 | ASTM Impact bar, 3.2 mm thick | J/m |
| IRNI | Izod Reverse Notched Impact, 23 °C, 5 lbf/ft pendulum energy | ASTM D256 | ASTM Impact bar, 3.2 mm thick | J/m |
| | Flexural properties or three point bending, 23 °C, crosshead speed of 1.3 mm/minute | ASTM D790 | Injection molded bar | |
| HDT | Heat deflection temperature, tested on 5 bars | ASTM D648 | Bar, 5x0.5x0.125 inches (127x12.7x3.2 mm) | °C |
| dE* | i7 spectrophotometer (X-Rite), CWF lighting, 10 degree observer CIE 94 standard, both UV and specular component included (SCI) mode | | Injection molded bars, 2 x 3 x 0.1 inches (50.8 x 76.2 x 2.54 mm) color plaque | |

Chemical resistance tests were performed by soaking the color plaques in the specified chemical under the indicated concentration and exposure conditions. Color differences (dE*) were measured by spectrophotometer before and after chemical exposure. Similarly, the ASTM Tensile bars were immersed in the same chemical for predefined exposure conditions. After exposure, bars were conditioned for 24 hrs at room temperature and 50% relative humidity, and were tested for strength retention before and after chemical exposure using the same ASTM D638 method described above. The retention of yield stress (tensile stress at yield)and elongation to break (nominal strain at break) is calculated compared to the reference sample that did not undergo the chemical exposure step.

UV weathering tests were performed according to ASTM D4459 and the color shift of (dE*) was the difference of between color plaques before and after exposure and measured by ColorEye 7000a spectrophotometer made by X-Rite. The instrument was set at D65 lighting source, 10 degree observer CIE 94 standard, both UV and specular component included (SCI) mode.

### Blending, Extrusion and Molding Conditions.

The compositions were made as follows. The polymer and additives, including colorants were dry blended. The blend was extruded into pellets using WP30 co-rotating twinscrew extruder 300 rpm, feed-rate adjusted for each batch and temperature settings systematically varied from at 550-610°F (288-320°C) die temperature depending on polymer composition.

The pellets were molded after drying at 250°F (116°C) for at least 4 hours. Injection molding of ASTM parts was done on a 180-Ton DEMAG machine. The oil-heated mold was set 220-250°F (104-121°C) and a flat barrel temperature profile was set between 560°F-610°F (293-320°C) depending on the polymer composition of the extruded pellets per batch. The injection speed was set at about 1 inch/sec (2.5 cm/second) and screw speed at 75 rpm. It will be recognized by one skilled in the art that the method is not limited to these temperatures or processing equipment.

### Examples 1-2

Examples 1-2 demonstrate the effect of the addition of PTFE to the thermoplastic compositions containing a poly(carbonate-siloxane) (PC-Si), polyetherimide (PEI), and the poly(carbonate-arylate ester-siloxane) (PC-ITR-Si). Formulations and results are shown in Table 3.

In the chemical resistance tests, samples were exposed at 23°C (room temperature) for 24 hours, then tested at 0.5% or 1.0% strain. Table 3 reports the percent retention of each property.

**Table 3.**

| COMPONENT (Wt.%) | | Ex1 | Ex2 |
|---|---|---|---|
| PEI | | 10 | 10 |
| PC-Si | | 84.9 | 83.9 |
| PC-ITR-Si | | 5 | 5 |
| Phosphite | | 0.1 | 0.1 |
| PTFE | | - | 1 |

| PROPERTIES | | | |
|---|---|---|---|
| Modulus of Elasticity-Avg (MPa) | | 2270 | 2244 |
| Tensile Strength at Yield-Avg (MPa) | | 56.4 | 55.8 |
| Tensile Strength at Break-Avg (MPa) | | 55.1 | 52.4 |
| % Elongation at Yield-Avg (%) | | 5.26 | 5.12 |
| % Elongation at Break-Avg (%) | | 98.86 | 88.14 |
| Nominal Strain at Break-Avg (%) | | 64.34 | 57.48 |
| Notched Izod Ductility (%) | | 100 | 100 |
| INI (23°C) Impact Strength-Avg (J/m) | | 459 | 432 |

| CHEMICAL RESISTANCE | | | |
|---|---|---|---|
| 0.5% strain; sunscreen* | Tensile strength at yield retention (%) | 100 | 100 |
| | Nominal strain at break retention (%) | 75 | 108 |
| 1% strain; sunscreen | Tensile strength at yield retention (%) | 0 | 0 |
| | Nominal strain at break retention (%) | 0 | 0 |
| 0.5% strain; oleic acid | Tensile stress at yield retention (%) | 100 | 100 |
| | Nominal strain at break retention (%) | 44 | 42 |
| 1% strain oleic acid | Tensile stress at yield retention (%) | 0 | 0 |
| | Nominal strain at break retention (%) | 0 | 0 |
| 0.5% strain; olive oil | Tensile stress at yield retention (%) | 100 | 100 |
| | Nominal strain at break retention (%) | 65 | 72 |
| 1 % strain olive oil | Tensile stress at yield retention (%) | 0 | 100 |
| | Nominal strain at break retention (%) | 0 | 84 |
| 0.5% strain; countertop cleaner | Tensile stress at yield retention (%) | 57 | 85 |
| | Nominal strain at break retention (%) | 30 | 49 |
| 0.5% strain; sebum | Tensile stress at yield retention (%) | 100 | 100 |
| | Nominal strain at break retention (%) | 93 | 46 |
| 1% strain; sebum | Tensile stress at yield retention (%) | 100 | 100 |
| | Nominal strain at break retention (%) | 33 | 55 |

| | | | |
|---|---|---|---|
| *Banana Boat® SPF ** Fantastik® cleaner | | | |

The results in Table 3 show that addition of PTFE to the compositions does not adversely impact the physical properties of the compositions. However, chemical resistance to olive oil was improved.

### Examples 3-7

Examples 3-7 demonstrate the effect of the addition of PPSU or PES to the thermoplastic compositions containing a poly(carbonate-siloxane) (PC-Si), with or without polyetherimide (PEI) and the poly(carbonate-arylate ester-siloxane) (PC-ITR-Si). Formulations and results are shown in Table 4.

In the chemical resistance tests, samples were exposed at 23 °C for 24 hours. Table 4 reports the percent retention of each property.

**Table 4.**

| COMPONENT (Wt.%) | | Ex3 | Ex4 | Ex5 | Ex6 | Ex7 |
|---|---|---|---|---|---|---|
| PEI | | 25 | - | - | 15 | 15 |
| PC-Si | | 58.0 | 58.0 | 58.0 | 58.0 | 58.8 |
| PC-ITR-Si | | 16.9 | 16.9 | 16.9 | 17 | 17 |
| Phosphite | | 0.10 | 0.10 | 0.10 | 0.10 | 0.10 |
| PPSU | | - | 25.00 | - | 10.0 | - |
| PES | | - | - | 25.0 | - | 10.0 |

| PROPERTIES | | | | | | |
|---|---|---|---|---|---|---|
| Modulus of Elasticity-Avg (MPa) | | 2530 | 2298 | 2324 | 2362 | 2394 |
| Tensile Strength at Yield-Avg (MPa) | | 65.8 | 58.8 | 59.2 | 60.5 | 61.2 |
| Tensile Strength at Break-Avg (MPa) | | 71.2 | 55.8 | 56.5 | 58.3 | 61.7 |
| % Elongation at Yield-Avg (%) | | 5.64 | 5.36 | 5.08 | 5 | 4.94 |
| % Elongation at Break-Avg (%) | | 108.6 | 84.36 | 99.86 | 88.02 | 97.98 |
| Nominal Strain at Break-Avg (%) | | 77.16 | 55.1 | 63.06 | 56.78 | 64.9 |
| Notched Izod Ductility (%) | | 100 | 0 | 0 | 40 | 30 |
| INI (23°C) Impact Strength-Avg (J/m) | | 1070 | 280 | 202 | 235 | 236 |

| CHEMICAL RESISTANCE | | | | | | |
|---|---|---|---|---|---|---|
| 0.5 % strain sunscreen* | Tensile strength at yield retention % | 100 | 100 | 100 | 101 | 100 |
| | Nominal strain at break retention % | 92 | 92 | 104 | 89 | 65 |
| 1% strain; sunscreen | Tensile strength at yield retention % | 0 | 100 | 100 | 100 | 100 |
| | Nominal strain at break retention % | 0 | 77 | 85 | 93 | 32 |
| 0.5% strain; oleic acid | Tensile stress at yield retention % | 100 | 100 | 100 | 100 | 100 |
| | Nominal strain at break retention % | 74 | 35 | 31 | 74 | 88 |
| 1% strain oleic acid | Tensile stress at yield retention % | 100 | 100 | 100 | 100 | 100 |
| | Nominal strain at break retention % | 86 | 59 | 86 | 100 | 36 |
| 0.5% strain olive oil | Tensile stress at yield retention % | 100 | 100 | 100 | 100 | 100 |
| | Nominal strain at break retention % | 73 | 63 | 59 | 90 | 78 |
| 1 % strain olive oil | Tensile stress at yield retention % | 100 | 0 | 100 | 100 | 100 |
| | Nominal strain at break retention % | 70 | 0 | 67 | 98 | 57 |
| 0.5% strain; countertop cleaner | Tensile stress at yield retention % | 100 | 100 | 0 | 100 | 67 |
| | Nominal strain at break retention % | 103 | 62 | 0 | 77 | 66 |
| 0.5% strain; sebum | Tensile stress at yield retention % | 100 | 100 | 100 | 101 | 93 |
| | Nominal strain at break retention % | 60 | 59 | 63 | 96 | 67 |
| 1% strain; sebum | Tensile stress at yield retention % | 100 | 100 | 100 | 101 | 0 |
| | Nominal strain at break retention % | 53 | 50 | 61 | 73 | 64 |

| | | | | | | |
|---|---|---|---|---|---|---|
| *Banana Boat® SPF ** Fantastik® cleaner | | | | | | |

The results in Table 4 show that two-component compositions with a poly(carbonate-siloxane) and either PPSU or PES (Ex8 and Ex9) have excellent notched Izod impact (>400 J/m) without the using any compatibilizer. However these two compositions also showed lowered resistance to chemicals.

Three-component compositions are those containing PEI, poly(carbonate-siloxane), and poly(carbonate-arylate ester-siloxane) (Ex3), or PPSU, poly(carbonate-siloxane), and poly(carbonate-arylate ester-siloxane) (Ex4), or PES, poly(carbonate-siloxane), and poly(carbonate-arylate ester-siloxane) (Ex5). Ex3, with PEI, showed the highest notched Izod compared to Ex4 and Ex5. However, Ex5 showed more balanced chemical resistance.

Four-component compositions are those containing PEI, poly(carbonate-siloxane), poly(carbonate-arylate ester-siloxane), and PPSU (Ex6), or PEI, poly(carbonate-siloxane), poly(carbonate-arylate ester-siloxane), and PES (Ex7). Ex6, containing PEI and PPSU, showed the best improvement in chemical resistance.

### Examples 10-15

Examples 10-15 demonstrate the effect of the addition of various additives and colorants to the thermoplastic compositions containing a poly(carbonate-siloxane) (PC-Si), polyetherimide (PEI), and the poly(carbonate-arylate ester-siloxane) (PC-ITR-Si). Formulations and results are shown in Table 5.

**Table 5.**

| COMPONENT (Wt.%) | Ex10 | Ex11 | Ex12 | Ex13 | Ex14 | Ex15 |
|---|---|---|---|---|---|---|
| PEI | 25 | 25 | 23.8 | 25 | 24 | 25 |
| PC-Si | 72.9 | 69.9 | 69.2 | 58.0 | 55.0 | 56.8 |
| PC-ITR-Si | - | - | - | 16.9 | 16.0 | 16.6 |
| Phosphite | 0.10 | 0.10 | 0.10 | 0.10 | 0.10 | 0.10 |
| SAN-gel | - | - | - | - | 5.00 | - |
| Fumed Silica | - | - | - | - | - | 2.00 |
| PC-Ester | 2.00 | 5.00 | 2.00 | | - | - |
| TiO₂ | - | - | 5.00 | - | - | - |

| PROPERTIES | | | | | | |
|---|---|---|---|---|---|---|
| Notched Izod Ductility (%) | 0 | 100 | 0 | 100 | 0 | 50 |
| INI (23°C) Impact Strength-Avg (J/m) | 244 | 367 | 242 | 837 | 178 | 298 |
| Tensile Modulus of Elasticity-Avg (MPa) | 2428 | 2402 | 2358 | 2474 | 2516 | 2490 |
| Tensile Strength at Yield-Avg (MPa) | 58.1 | 58.7 | 56.1 | 66 | 65.7 | 65.9 |
| Tensile Strength at Break-Avg (MPa) | 52.2 | 60.1 | 50.8 | 67.4 | 61 | 57.2 |
| % Elongation at Yield-Avg (%) | 4.88 | 4.84 | 4.84 | 5.59 | 5.26 | 5.51 |
| % Elongation at Break-Avg (%) | 61.17 | 94.42 | 68.1 | 100.11 | 94.26 | 72.69 |
| Nominal Strain at Break-Avg (%) | 35.58 | 62.03 | 35.86 | 68.79 | 61.52 | 46.9 |
| Highest glass transition temperature (°C) | 215.4 | 216.6 | 217.8 | 189.9 | 189.2 | 188 |
| Goss (60°) | 40.4 | 33.4 | 32.3 | 62.7 | 20.8 | 52.9 |
| dE* (after 100 hours UV exposure) | 11.36 | 11.11 | 8.05 | 8.49 | 6.8 | 9.07 |

Ex10, 11, and 12 show that with the addition of a matting agent (PC-ester) the two-component compositions containing PEI and poly(carbonate-siloxane) have inherently low gloss (<45). Three-component compositions (Ex13) without a matting agent increase the gloss to greater than 60 and greatly improve impact.

Comparison of Ex10 and Ex11 with Ex12 shows the color change after 100 hours of UV exposure was reduced from about 11 to about 8 by the addition of 5 wt.% TiO₂.

Comparison of Ex13 and Ex14 show that upon addition of the matting agent SAN-gel, the gloss level was reduced from about 63 to about 21. The color change of the composition after aging was reduced by 1-2 units but, the impact strength was also reduced.

### Example 16-26

Examples 16 through 26 are to demonstrate UV stabilizer's effect to reduce color shift after 300 hrs exposure per ASTM D4459 protocol. Results are shown in Table 6.

**Table 6**

| Components | Ex3 | Ex16 | Ex17 | Ex18 | Ex19 | Ex20 | Ex21 | Ex22 | Ex23 | Ex24 | Ex25 | Ex26 |
|---|---|---|---|---|---|---|---|---|---|---|---|---|
| PEI | 25.00 | 25.00 | 25.00 | 15.00 | 15.00 | 15.00 | 15.00 | 15.00 | 15.00 | 15.00 | 15.00 | 15.00 |
| PC-Si | 58.00 | 58.00 | 58.00 | 58.00 | 58.00 | 58.00 | 58.00 | 58.00 | 58.00 | 58.00 | 58.00 | 58.00 |
| PC-ITR-Si | 16.90 | 16.90 | 16.90 | 17.00 | 17.00 | 17.00 | 17.00 | 17.00 | 17.00 | 17.00 | 17.00 | 17.00 |
| Phosphite | 0.10 | 0.10 | 0.10 | 0.10 | 0.10 | 0.10 | 0.10 | 0.10 | 0.10 | 0.10 | 0.10 | 0.10 |
| PPSU | | | | 10.00 | 10.00 | 10.00 | | | | | | |
| PES | | | | | | | 10.00 | 10.00 | 10.00 | | | |
| PSU | | | | | | | | | | 10.00 | 10.00 | 10.00 |
| UVS-1 | | 4.00 | | | 4.00 | | | 4.00 | | | 4.00 | |
| UVS-2 | | | 4.00 | | | 4.00 | | | 4.00 | | | 4.00 |

| DE* Results | | | | | | | | | | | | |
|---|---|---|---|---|---|---|---|---|---|---|---|---|
| 0 hrs | 0.0 | 0.0 | 0.0 | 0.0 | 0.0 | 0.0 | 0.0 | 0.0 | 0.0 | 0.0 | 0.0 | 0.0 |
| 100 hrs | 7.7 | 0.8 | 0.6 | 12.2 | 0.9 | 2.8 | 10.3 | 0.6 | 1.0 | 10.4 | 0.7 | 0.8 |
| 200 hrs | 8.6 | 1.5 | 0.8 | 13.8 | 1.5 | 4.9 | 11.3 | 1.4 | 1.2 | 11.4 | 1.4 | 1.2 |
| 300 hrs | 11.6 | 3.9 | 3.9 | 17.7 | 4.3 | 10.1 | 14.7 | 3.8 | 4.1 | 14.4 | 3.9 | 4.2 |
| DE* Reduction (%) | 0 | 66.4 | 66.4 | 0 | 75.7 | 42.9 | 0 | 74.1 | 72.1 | 0 | 72.9 | 70.8 |

Ex3 shows that it has color shift of DE* after 300 hrs at 11.6 units. When UV stabilizer is used (Ex16 and 17), DE* is reduced to 3.9 and 3.9 units respectively, a 64% reduction.

When a polysulfone is included in formulation (Ex18, 21 and 24), DE* is increased to 17.4, 14.7 and 14.4 respectively after 300 hrs exposure from 11.6 (Ex3). However, when a UV stabilizer is used, DE* is reduced to 4.3 and 10.1 (Ex19 and 20) from 17.4, a reduction of 75.5% and 42.9% respectively in the case of PPSU, reduced to 3.8 and 4.1 (Ex22 and 23) from 14.7, a reduction of 74.1% and 72.1% respectively in the case of PES and reduced to 3.9 and 4.2 (Ex25 and 26) from 14.4, a reduction of 72.9% and 70.8% respectively in the case of PSU.

Set forth below are various embodiments of the composition, the article containing the same, and the method of manufacture.

A thermoplastic composition comprises, based on the total weight of the thermoplastic composition, 10 to 50 wt.% of a poly(arylene ether-sulfone), or a combination comprising a poly(arylene ether-sulfone) and a poly(etherimide); 35 to 90 wt.% of a poly(carbonate-siloxane); 0.5 to 25 wt.% of a poly(carbonate-arylate ester) compatibilizer, a poly(carbonate-arylate ester-siloxane) compatibilizer, or a combination comprising at least one of the foregoing, and up to 15 wt.% of an ultraviolet light stabilizer; wherein a sample of the composition has a notched Izod impact energy of at least 200 J/m at 23°C measured in accordance to ASTM D256; and a 50% higher notched Izod impact energy value compared to the composition without the compatibilizer component measured in accordance to ASTM D256.

The composition has one or more of the following properties: (i) the composition has a tensile yield stress and nominal strain at break retention of 40% or higher after exposure of an ASTM tensile bar for 24 hours at 23°C to sunscreen under 1% strain or lower as measured by ASTM D256; (ii) the composition has a tensile yield stress retention of 40% or higher after exposure of an ASTM tensile bar for 24 hours at 23°C to oleic acid under 0.5% strain as measured by ASTM D256; (iii) the composition has a tensile yield stress retention of 40% or higher after exposure of an ASTM tensile bar for 24 hours at 23°C to sebum under 0.5% strain as measured by ASTM D256; (iv) the composition has higher gloss than the same composition without the compatibilizer; (v) the composition has a lower delta E than the same composition without the compatibilizer after ultraviolet aging.

The poly(arylene ether-sulfone) is of the formula -Ar1-SO2-Ar2-O- wherein each Ar1 and Ar2 is the same is the same or different, and is group of formula (3), wherein c is 0 or 1, Ra and Rb are each independently a linear or branched C1-10 alkyl, linear or branched C2-10 alkenyl, linear or branched C2-10 alkynyl, C6-18 aryl, C7-20 alkylaryl, C7-20 arylalkyl, C5-10 cycloalkyl, C5-20 cycloalkenyl, linear or branched C1-10 alkylcarbonyl, C6-18 arylcarbonyl, halogen, nitro, cyano, a halogen, C1-12 alkoxy, or C1-12 alkyl, p and q are each independently integers of 0 to 4, and Xa is a single bond, -O-, -S-, -S(O)-, -S(O)2-, -C(O)-, or a C1-18 organic group. Specifically the poly(arylene ether-sulfone) comprises units of the formulas (1a), (1b), (1c), (1d), or a combination comprising at least one of the foregoing units.

The polyetherimide comprises units of the formula (3), wherein R is a C2-20 hydrocarbon group, and Z is an aromatic C6-24 monocyclic or polycyclic group optionally substituted with 1 to 6 C1-8 alkyl groups, 1 to 8 halogen atoms, or a combination thereof, wherein the divalent bonds of the -O-Z-O- group are in the 3,3', 3,4', 4,3', or the 4,4' positions, preferably, R is a divalent group of the formulas (8) wherein Q¹ is -O-, -S-, -C(O)-, -SO₂-, -SO-, -C_{y}H_{2y}- wherein y is an integer from 1 to 5 or a halogenated derivative thereof or -(C₆H₁₀)_{z}- wherein z is an integer from 1 to 4, and Z is a divalent group of the formula (5) wherein Q is -O- , -S-, -C(O)-, -SO₂-, -SO-, or -C_{y}H_{2y}- wherein y is an integer from 1 to 5, more preferably, R is meta-phenylene, para-phenylene, or a combination thereof, and Z is 2,2'-bis(4-phenylene)propane.

The poly(carbonate-siloxane) comprises bisphenol carbonate units of the formula (6) wherein Ra and Rb are each independently C₁₋₁₂ alkyl, C₁₋₁₂ alkenyl, C₃₋₈ cycloalkyl, or C1-12 alkoxy, p and q are each independently 0 to 4, and Xa is a single bond, -O-, -S-, -S(O)-, - S(O)₂-, -C(O)-, a C1-11 alkylidene of formula -C(R_{c})(R_{d}) - wherein Rc and Rd are each independently hydrogen or C1-10 alkyl, or a group of the formula -C(=Re)- wherein Re is a divalent C1-10 hydrocarbon group; optionally, the carbonate units are bisphenol carbonate units; and polysiloxane units of the formula (9) wherein R is each independently a C₁₋₁₃ monovalent hydrocarbon group, and E has an average value of 2 to 200, preferably, the siloxane units are of the formula (9a-1), (9a-2), (9b-1), (9b-2), (9b-3), (9b-4), or a combination comprising at least one of the foregoing, wherein E has an average value of 2 to 200, wherein the poly(carbonate-siloxane) comprises 0.5 to 55 wt.% of siloxane units based on the total weight of the poly(carbonate-siloxane).

The poly(carbonate-arylate ester-siloxane) comprises repeating carbonate units of the formula (6), wherein Ra and Rb are each independently are each independently C₁₋₁₂ alkyl, p and q are each independently integers of 0 to 4, and Xa is a single bond, -O-, -S-, -S(O)-, -S(O)₂-, -C(O)-, or a C₁₋₁₈ organic group; optionally, the carbonate units are bisphenol carbonate units; and arylate ester units of the formula (11), wherein Rh is each independently a halogen or C1-10 hydrocarbon group, and n is 0 to 4; optionally, the arylate ester units are isophthalic acid-terephthalic acid-resorcinol units; and siloxane units of the formula (9), wherein each R is independently a C₁₋₁₃ monovalent hydrocarbon group, and E has an average value of 2 to 500; preferably the siloxane units are of the formula (9a-1), (9a-2), (9b-1), (9b-2), (9b-3), (9b-4), or a combination comprising at least one of the foregoing, wherein E has an average value of 2 to 200. Exemplary poly(carbonate-arylate ester-siloxane) comprises 1 to 40 mol% of the bisphenol A carbonate units, 50 to 95 mol% of isophthalic acid-terephthalic acid-resorcinol units, and the siloxane units in an amount effective to provide 0.1 to 10 wt% of siloxane units, based on the weight of the poly(carbonate-ester-siloxane).

The poly(carbonate-arylate ester) comprises repeating carbonate units (6) such as bisphenol A carbonate units and arylate ester units (11), specifically ITR ester units (11a).

One or more of the following conditions can apply: (i) the composition further comprising 0.1 to 10 wt.% of a fluoropolymer such as polytetrafluoroethylene; (ii) the composition further comprises a processing aid, a heat stabilizer, a colorant, a flame retardant, or a combination comprising at least one of the foregoing; (iii) the ultraviolet light stabilizer is present in an amount of 0.0001 to 15 wt.%, based on the total weight of the composition; (iv) the ultraviolet light stabilizer comprises a benzophenone, triazine, benzoxazinones, benzotriazole, benzoate, formamidine, cinnamate/propenoate, aromatic propanedione, benzimidazole, cycloaliphatic ketone, formanilide, cyanoacrylate, benzopyranone, salicylate, or a combination comprising at least one of the foregoing; (v) the ultraviolet light stabilizer comprises resorcinol monobenzoate; 2-(2H-benzotriazol-2-yl)-4-(1,1,3,3-tetramethylbutyl)-phenol; 2-hydroxy-4-n-octyloxybenzophenone; 2-[4,6-bis(2,4-dimethylphenyl)-1,3,5-triazin-2-yl]- 5-(octyloxy)-phenol; 2,2'-(1,4-phenylene)bis(4H-3,1-benzoxazin-4-one); poly[(6-morphilino-s-triazine-2,4-diyl)[2,2,6,6-tetramethyl-4-piperidyl)imino]-hexamethylene[(2,2,6,6-tetramethyl-4-piperidyl)imino], 2-hydroxy-4-octyloxybenzophenone, 2-tert-butyl-6-(5-chloro-2H-benzotriazole-2-yl)-4-methylphenyl, 2,4-di-tert-butyl-6-(5-chloro-2H-benzotriazole-2-yl)-phenol, 2-(2H-benzotriazole-2-yl)-4,6-di-tert-pentylphenol, 1,3-bis[(2'cyano-3',3'-diphenylacryloyl)oxy]-2,2-bis-{[(2'-cyano-3',3'-diphenylacryloyl)oxy]methyl}-propane, 2-(2H-benzotriazole-2-yl)-4-methylphenol, 2-(2H-benzotriazole-2-yl)-4,6-bis(1-methyl-1-phenyethyl)phenol, ethyl-2-cyano-3,3-diphenylacrylate, (2-ethylhexyl)-2-cyano-3,3-diphenylacrylate, N,N'-bisformyl-N,N'-bis(2,2,6,6-tetramethyl-4-piperidinyl)hexamethylendiamine, bis-(2,2,6,6-tetramethyl-4-piperidyl)-sebacate, bis-(1,2,2,6,6-pentamethyl-4-piperdiyl)-sebacate + methyl-(1,2,2,6,6-pentamethyl-4-piperidyl)-sebacate, or a combination comprising at least one of the foregoing; (v) the composition comprises 0.5 to 20 wt.% of titanium dioxide; (vi) the composition has a delta E after aging of less than 20 after 300 hours of exposure to UV radiation measured according to ASTM D4459; or (vii) the composition further comprises a reinforcing agent, preferably wherein the reinforcing agent comprises glass fibers in an amount from 1 to 200 parts by weight based on 100 parts by weight of the polymers, wherein the glass fibers have a round or flat cross-section.

An article selected from a molded article, a thermoformed article, an extruded film, an extruded sheet, a foamed article, one or more layers of a multi-layer article, a substrate for a coated article, and a substrate for a metallized article comprising the composition of any one or more of embodiments.

One or more of the following conditions can apply to the article: (i) the article further comprises a metal such as aluminum deposited on a surface of the article; wherein the metal is optionally anodized; (ii) the composition maintains its properties during an anodization process; (iii) no property of the composition varies by more than 10%, preferably by no more than 5%, and more preferably by no more than 2% after anodization relative to the same property before anodization; (iv) the article is a component of a consumer electronic device selected from a gaming console, a gaming controller, a portable gaming device, a cellular telephone, a television, a personal computer, a tablet computer, a laptop computer, a personal digital assistant, a portable media player, a, a digital camera, a portable music player, an appliance, a power tool, a robot, a toy, a greeting card, a home entertainment system, and active loudspeaker, or a soundbar; wherein optionally the component is a housing, a frame, a clip, a bezel, a bushing, a flange, a strut, a prong, a fin, or a rib; (v) the article is an automobile interior component selected from trim, an air outlet, a button, a ventilator, an instrument panel, a lens, or a cover.

A method of manufacture of an article, comprising molding, extruding, 3D printing, thermoforming, compression molding or casting the composition of any one or more of the above embodiments to form the article.

The singular forms "a," "an," and "the" include plural referents unless the context clearly dictates otherwise. "Or" means "and/or." The endpoints of all ranges directed to the same component or property are inclusive and independently combinable. nless defined otherwise, technical and scientific terms used herein have the same meaning as is commonly understood by one of skill in the art to which this invention belongs. As used herein, a "combination" is inclusive of blends, mixtures, alloys, reaction products, and the like.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the terms "hydrocarbyl" and "hydrocarbon" refer broadly to a substituent comprising carbon and hydrogen, optionally with 1 to 3 heteroatoms, for example, oxygen, nitrogen, halogen, silicon, sulfur, or a combination thereof; "alkyl" is a straight or branched chain, saturated monovalent hydrocarbon group; "alkylene" is a straight or branched chain, saturated, divalent hydrocarbon group; "alkylidene" is a straight or branched chain, saturated divalent hydrocarbon group, with both valences on a single common carbon atom; "alkenyl" is a straight or branched chain monovalent hydrocarbon group having at least two carbons joined by a carbon-carbon double bond; "cycloalkyl" is a non-aromatic monovalent monocyclic or multicylic hydrocarbon group having at least three carbon atoms, "cycloalkenyl" is a non-aromatic cyclic divalent hydrocarbon group having at least three carbon atoms, with at least one degree of unsaturation; "aryl" is an aromatic monovalent group containing only carbon in the aromatic ring or rings; "arylene" is an aromatic divalent group containing only carbon in the aromatic ring or rings; "alkylaryl" is an aryl group that has been substituted with an alkyl group as defined above, with 4-methylphenyl being an exemplary alkylaryl group; "arylalkyl" is an alkyl group that has been substituted with an aryl group as defined above, with benzyl being an exemplary arylalkyl group; "alkoxy" is an alkyl group as defined above with the indicated number of carbon atoms attached through an oxygen bridge (-O-); and "aryloxy" is an aryl group as defined above with the indicated number of carbon atoms attached through an oxygen bridge (-O-).

Unless otherwise indicated, each of the foregoing groups can be unsubstituted or substituted, provided that the substitution or combinations of substitutions does not significantly adversely affect synthesis, stability, or use of the compound. "Substituted" as used herein means that at least one hydrogen on the designated atom or group is replaced with another group, provided that the designated atom's normal valence is not exceeded. When the substituent is oxo (i.e., =O), then two hydrogens on the atom are replaced. Unless otherwise indicated, groups that can be present on a "substituted" position include, but are not limited to, cyano; hydroxyl; nitro; azido; alkanoyl (such as a C₂₋₆ alkanoyl group such as acyl); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxy groups; C₆₋₁₀ aryloxy such as phenoxy; C₁₋₆ alkylthio; C₁₋₆ or C₁₋₃ alkylsulfinyl; C1-6 or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ alkylaryl having 1 to 3 separate or fused rings and from 6 to 18 ring carbon atoms; or arylalkoxy having 1 to 3 separate or fused rings and from 6 to 18 ring carbon atoms, with benzyloxy being an exemplary arylalkoxy group.

## Claims

1. A thermoplastic composition comprising, based on the total weight of the thermoplastic composition,
10 to 50 wt.% of a poly(arylene ether-sulfone), or a combination comprising a poly(arylene ether-sulfone) and a poly(etherimide);
35 to 90 wt.% of a poly(carbonate-siloxane),
0.5 to 25 wt.% of a poly(carbonate-arylate ester) compatibilizer, a poly(carbonate-arylate ester-siloxane) compatibilizer, or a combination comprising at least one of the foregoing, and
up to 15 wt.% of an ultraviolet light stabilizer;
wherein a sample of the composition has
a notched Izod impact energy of at least 200 J/m at 23°C measured in accordance to ASTM D256; and
a 40% higher notched Izod impact energy value compared to the composition without the compatibilizer component measured in accordance to ASTM D256.

2. The composition of claim 1, wherein the poly(arylene ether-sulfone) is of the formula
-Ar¹-SO₂-Ar²-O-
wherein each Ar¹ and Ar² is the same is the same or different, and is group of formula 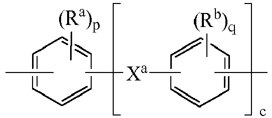 wherein
c is 0 or 1,
R^{a} and R^{b} are each independently a linear or branched C₁₋₁₀ alkyl, linear or branched C₂₋₁₀ alkenyl, linear or branched C₂₋₁₀ alkynyl, C₆₋₁₈ aryl, C₇₋₂₀ alkylaryl, C₇₋₂₀ arylalkyl, C₅₋₁₀ cycloalkyl, C₅₋₂₀ cycloalkenyl, linear or branched C1-10 alkylcarbonyl, C₆₋₁₈ arylcarbonyl, halogen, nitro, cyano, a halogen, C₁₋₁₂ alkoxy, or C₁₋₁₂ alkyl,
p and q are each independently integers of 0 to 4, and
X^{a} is a single bond, -O-, -S-, -S(O)-, -S(O)₂-, -C(O)-, or a C₁₋₁₈ organic group.

3. The composition of claim 2, wherein the poly(arylene ether-sulfone) comprises units of the formula 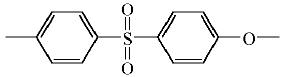 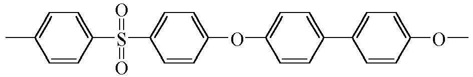 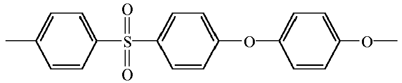 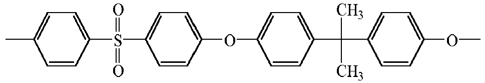 or a combination comprising at least one of the foregoing units.

4. The composition of any one or more of claims 1 to 3, wherein the polyetherimide comprises units of the formula 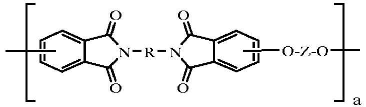 wherein
R is a C₂₋₂₀ hydrocarbon group, and
Z is an aromatic C₆₋₂₄ monocyclic or polycyclic group optionally substituted with 1 to 6 C₁₋₈ alkyl groups, 1 to 8 halogen atoms, or a combination thereof, wherein the divalent bonds of the -O-Z-O- group are in the 3,3', 3,4', 4,3', or the 4,4' positions.

5. The composition of claim 4, wherein
R is a divalent group of the formula 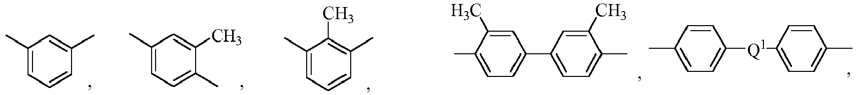 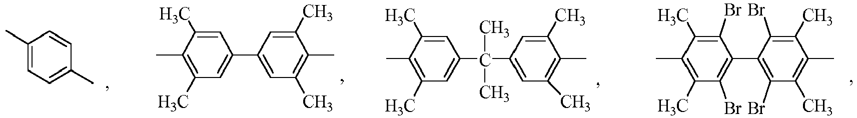 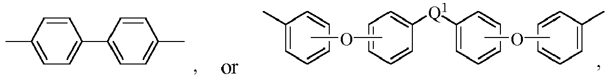 wherein Q¹ is -O-, -S-, -C(O)-, -SO₂-, -SO-, -C_{y}H_{2y}- wherein y is an integer from 1 to 5 or a halogenated derivative thereof or -(C₆H₁₀)_{z}- wherein z is an integer from 1 to 4, and
Z is a divalent group of the formula 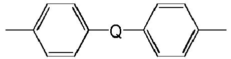 wherein Q is -O-, -S-, -C(O)-, -SO₂-, -SO-, or -C_{y}H_{2y}- wherein y is an integer from 1 to 5.

6. The composition of any one or more of claims 1 to 5, wherein the poly(carbonate-siloxane) comprises
bisphenol carbonate units of the formula 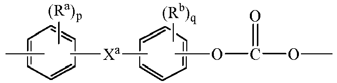 wherein
R^{a} and R^{b} are each independently C₁₋₁₂ alkyl, C₁₋₁₂ alkenyl, C₃₋₈ cycloalkyl, or C₁₋₁₂ alkoxy,
p and q are each independently 0 to 4, and
X^{a} is a single bond, -O-, -S-, -S(O)-, -S(O)₂-, -C(O)-, a C₁₋₁₁ alkylidene of formula -C(R^{c})(R^{d})- wherein R^{c} and R^{d} are each independently hydrogen or C₁₋₁₀ alkyl, or a group of the formula -C(=R^{e})- wherein R^{e} is a divalent C₁₋₁₀ hydrocarbon group; and
and polysiloxane units of the formula 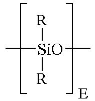 wherein
R is each independently a C₁₋₁₃ monovalent hydrocarbon group, and
E has an average value of 2 to 200.

7. The composition of any one or more of claims 1 to 6, wherein the poly(carbonate-arylate ester-siloxane) comprises
repeating carbonate units of the formula 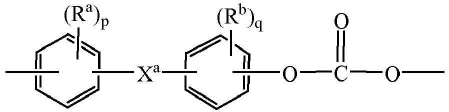 wherein
R^{a} and R^{b} are each independently are each independently C₁₋₁₂ alkyl,
p and q are each independently integers of 0 to 4, and
X^{a} is a single bond, -O-, -S-, -S(O)-, -S(O)₂-, -C(O)-, or a C₁₋₁₈ organic group; and arylate ester units of the formula 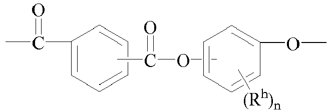 wherein
R^{h} is each independently a halogen or C₁₋₁₀ hydrocarbon group, and
n is 0 to 4; and
siloxane units of the formula 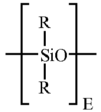 wherein
each R is independently a C₁₋₁₃ monovalent hydrocarbon group, and
E has an average value of 2 to 500.

8. The composition of any one or more of claims 6 to 7, wherein the siloxane units in the poly(carbonate-siloxane) and the poly(carbonate-arylate ester-siloxane) are independently of the formula 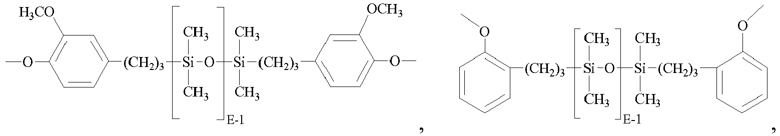 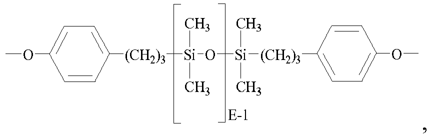 or a combination comprising at least one of the foregoing, wherein E has an average value of 2 to 200.

9. The composition of any one or more of claims 1 to 8, wherein the poly(carbonate-arylate ester) comprises:
repeating carbonate units of the formula 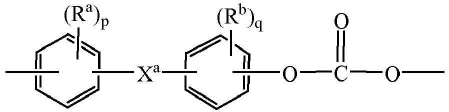 wherein
R^{a} and R^{b} are each independently are each independently C₁₋₁₂ alkyl,
p and q are each independently integers of 0 to 4, and
X^{a} is a single bond, -O-, -S-, -S(O)-, -S(O)₂-, -C(O)-, or a C₁₋₁₈ organic group; and
arylate ester units of the formula 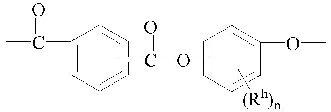 wherein
R^{h} is each independently a halogen or C₁₋₁₀ hydrocarbon group, and
n is 0 to 4.

10. The composition of any one or more of claims 1 to 9, further comprising 0.1 to 10 wt.% of a fluoropolymer, wherein optionally the fluoropolymer is polytetrafluoroethylene.

11. The composition of any one or more of claims 1 to 10, further comprising a processing aid, a heat stabilizer, a colorant, a flame retardant, or a combination comprising at least one of the foregoing.

12. The composition of any one or more of claims 1 to 11, wherein the ultraviolet light stabilizer is present in an amount of 0.0001 to 15 wt.%, based on the total weight of the composition and wherein the ultraviolet light stabilizer comprises a benzophenone, triazine, benzoxazinones, benzotriazole, benzoate, formamidine, cinnamate/propenoate, aromatic propanedione, benzimidazole, cycloaliphatic ketone, formanilide, cyanoacrylate, benzopyranone, salicylate, or a combination comprising at least one of the foregoing.

13. The composition of any one or more of claims 1 to 12, wherein the composition comprises 0.5 to 20 wt.% of titanium dioxide.

14. The composition of any of claims 1 to 13, further comprising a reinforcing agent, preferably wherein the reinforcing agent comprises glass fibers in an amount from 1 to 200 parts by weight based on 100 parts by weight of the polymers, wherein the glass fibers have a round or flat cross-section.

15. An article selected from a molded article, a thermoformed article, an extruded film, an extruded sheet, a foamed article, one or more layers of a multi-layer article, a substrate for a coated article, and a substrate for a metallized article comprising the composition of any one or more of claims 1 to 14.

## Patentansprüche

1. Thermoplastische Zusammensetzung umfassend bezogen auf das Gesamtgewicht der thermoplastischen Zusammensetzung
10 bis 50 Gew.-% eines Poly(arylenethersulfons) oder einer Kombination, die ein Poly(arylenethersulfon) und ein Poly(etherimid) umfasst;
35 bis 90 Gew.-% eines Poly(carbonat-Siloxans),
0,5 bis 25 Gew.-% eines Poly(carbonat-Arylatester)-Verträglichmachers, eines Poly(carbonat-Arylatester-Siloxan)-Verträglichmachers oder einer Kombination, die mindestens einen der Vorangehenden umfasst, und
bis zu 15 Gew.-% eines Ultraviolettlicht-Stabilisators;
wobei eine Probe der Zusammensetzung Folgendes aufweist:
einen Kerbschlagenergie nach Izod von mindestens 200 J/m bei 23 °C, gemessen nach ASTM D256; und
eine um 40 % höheren Kerbschlagenergiewert nach Izod im Vergleich zu der Zusammensetzung ohne die Verträglichmacher-Komponente, gemessen nach ASTM D256.

2. Zusammensetzung nach Anspruch 1, wobei das Poly(arylenethersulfon) die Formel
-Ar¹-SO₂-Ar²-O-
aufweist, wobei jedes Ar¹ und Ar² gleich oder verschieden ist und eine Gruppe der Formel 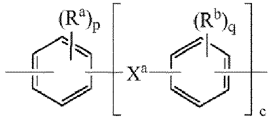 ist, wobei
c für 0 oder 1 steht,
R^{a} und R^{b} jeweils unabhängig voneinander für ein lineares oder verzweigtes C₁₋₁₀-Alkyl, lineares oder verzweigtes C₂₋₁₀-Alkenyl, lineares oder verzweigtes C₂₋₁₀-Alkinyl, C₆₋₁₈-Aryl, C₇₋₂₀-Alkylaryl, C₇₋₂₀-Arylalkyl, C₅₋₁₀-Cycloalkyl, C₅₋₂₀-Cycloalkenyl, lineares oder verzweigtes C₁₋₁₀-Alkylcarbonyl, C₆₋₁₈-Arylcarbonyl, Halogen, Nitro, Cyano, ein Halogen, C₁₋₁₂-Alkoxy oder C₁₋₁₂-Alkyl stehen,
p und q jeweils unabhängig voneinander für ganze Zahlen von 0 bis 4 stehen und
X^{a} für eine Einfachbindung, -O-, -S-, -S(O)-, -S(O)₂-, -C(O)- oder eine organische C₁₋₁₈-Gruppe steht.

3. Zusammensetzung nach Anspruch 2, wobei das Poly(arylenethersulfon) Einheiten der Formel 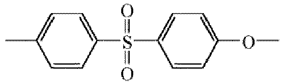 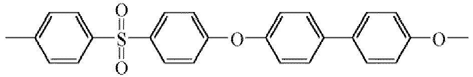 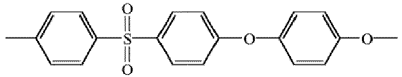 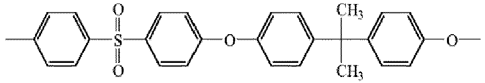 oder eine mindestens eine der vorangehenden Einheiten umfassende Kombination umfasst.

4. Zusammensetzung nach irgendeinem oder mehreren der Ansprüche 1 bis 3, wobei das Polyetherimid Einheiten der Formel 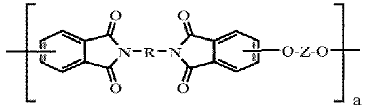 umfasst, wobei
R für eine C₂₋₂₀-Kohlenwasserstoffgruppe steht und
Z für eine aromatische monocyclische oder polycyclische C₆₋₂₄-Gruppe, die gegebenenfalls mit 1 bis 6 C₁₋₈-Alkylgruppen, 1 bis 8 Halogenatomen oder einer Kombination davon substituiert ist, steht, wobei die zweiwertigen Bindungen der Gruppe -O-Z-O- sich in den Positionen 3,3', 3,4', 4,3' oder 4,4' befinden.

5. Zusammensetzung nach Anspruch 4, wobei
R eine zweiwertige Gruppe der Formel 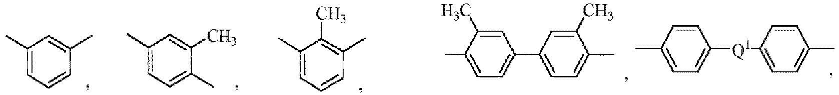 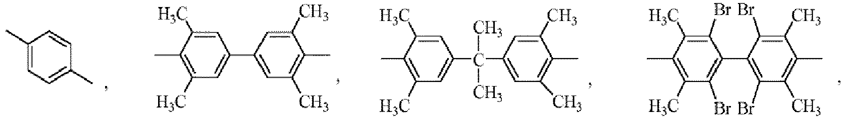 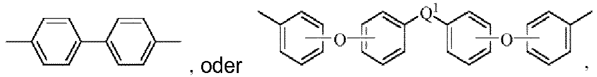 ist, wobei Q¹ für -O-, -S-, -C(O)-, -SO₂-, -SO-, -C_{y}H_{2y}-, wobei y für eine ganze Zahl von 1 bis 5 steht, oder ein halogeniertes Derivat davon oder -(C₆H₁₀)_{z}-, wobei z eine ganze Zahl von 1 bis 4 bedeutet, steht und
Z eine zweiwertige Gruppe der Formel 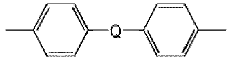 ist, wobei Q für -O-, -S-, -C(O)-, -SO₂-, -SO- oder -C_{y}H_{2y}-, wobei y eine ganze Zahl von 1 bis 5 bedeutet, steht.

6. Zusammensetzung nach irgendeinem oder mehreren der Ansprüche 1 bis 5, wobei das Poly(carbonat-Siloxan) Folgendes umfasst:
Bisphenol-Carbonat-Einheiten der Formel 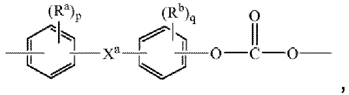 wobei
R^{a} und R^{b} jeweils unabhängig voneinander für C₁₋₁₂-Alkyl, C₁₋₁₂-Alkenyl, C₃₋₈-Cycloalkyl oder C₁₋₁₂-Alkoxy stehen,
p und q jeweils unabhängig voneinander für 0 bis 4 stehen und
X^{a} für eine Einfachbindung, -O-, -S-, -S(O)-, -S(O)₂-, -C(O)-, ein C₁₋₁₁-Alkyliden der Formel -C(R^{c})(R^{d})-, wobei R^{c} und R^{d} jeweils unabhängig voneinander Wasserstoff oder C₁₋₁₀-Alkyl bedeuten, oder eine Gruppe der Formel -C(=R^{e})-, wobei R^{e} eine zweiwertige C₁₋₁₀-Kohlenwasserstoffgruppe bedeutet, steht; und
Polysiloxan-Einheiten der Formel 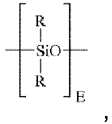 wobei
R jeweils unabhängig für eine einwertige C₁₋₁₃-Kohlenwasserstoffgruppe steht und
E einen Mittelwert von 2 bis 200 aufweist.

7. Zusammensetzung nach irgendeinem oder mehreren der Ansprüche 1 bis 6, wobei das Poly(carbonat-Arylatester-Siloxan) Folgendes umfasst:
sich wiederholende Carbonat-Einheiten der Formel 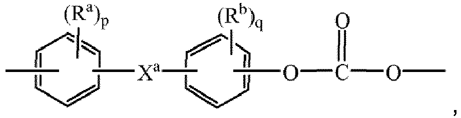 wobei
R^{a} und R^{b} jeweils unabhängig voneinander für C₁₋₁₂-Alkyl stehen,
p und q jeweils unabhängig voneinander für ganze Zahlen von 0 bis 4 stehen und
X^{a} für eine Einfachbindung, -O-, -S-, -S(O)-, -S(O)₂-, -C(O)- oder eine organische C₁₋₁₈-Gruppe steht; und
Arylatester-Einheiten der Formel 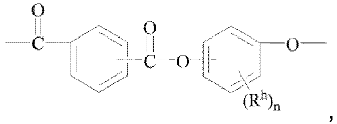 wobei
R^{h} jeweils unabhängig für ein Halogen oder eine C₁₋₁₀-Kohlenwasserstoffgruppe steht und
n für 0 bis 4 steht; und
Siloxan-Einheiten der Formel 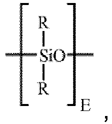 wobei
jedes R unabhängig für eine einwertige C₁₋₁₃-Kohlenwasserstoffgruppe steht und
E einen Mittelwert von 2 bis 500 aufweist.

8. Zusammensetzung nach irgendeinem oder mehreren der Ansprüche 6 bis 7, wobei die Siloxan-Einheiten in dem Poly(carbonat-Siloxan) und dem Poly(carbonat-Arylatester-Siloxan) unabhängig voneinander die Formel 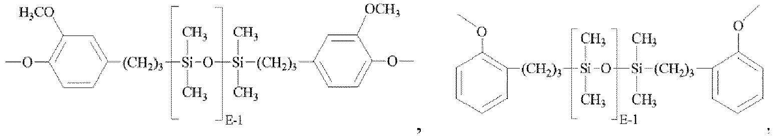 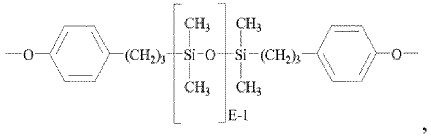 oder eine mindestens eine der Vorangehenden umfassende Kombination aufweisen, wobei E einen Mittelwert von 2 bis 200 aufweist.

9. Zusammensetzung nach irgendeinem oder mehreren der Ansprüche 1 bis 8, wobei der Poly(carbonat-Arylatester) Folgendes umfasst:
sich wiederholende Carbonat-Einheiten der Formel 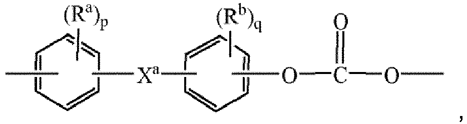 wobei
R^{a} und R^{b} jeweils unabhängig voneinander für C₁₋₁₂-Alkyl stehen,
p und q jeweils unabhängig voneinander für ganze Zahlen von 0 bis 4 stehen und
X^{a} für eine Einfachbindung, -O-, -S-, -S(O)-, -S(O)₂-, -C(O)- oder eine organische C₁₋₁₈-Gruppe steht; und
Arylatester-Einheiten der Formel 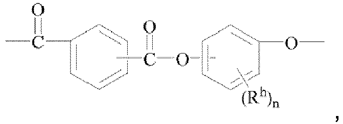 wobei
R^{h} jeweils unabhängig für ein Halogen oder eine C₁₋₁₀-Kohlenwasserstoffgruppe steht und
n für 0 bis 4 steht.

10. Zusammensetzung nach irgendeinem oder mehreren der Ansprüche 1 bis 9, ferner umfassend 0,1 bis 10 Gew.-% eines Fluorpolymers, wobei das Fluorpolymer gegebenenfalls Polytetrafluorethylen ist.

11. Zusammensetzung nach irgendeinem oder mehreren der Ansprüche 1 bis 10, ferner umfassend ein Verarbeitungshilfsmittel, einen Wärmestabilisator, einen Farbstoff, einen Flammhemmer oder eine mindestens eines der Vorangehenden umfassende Kombination.

12. Zusammensetzung nach irgendeinem oder mehreren der Ansprüche 1 bis 11, wobei der Ultraviolettlicht-Stabilisator in einer Menge von 0,0001 bis 15 Gew.-% bezogen auf das Gesamtgewicht der Zusammensetzung vorhanden ist und wobei der Ultraviolettlicht-Stabilisator ein Benzophenon, Triazin, Benzoxazinone, Benzotriazol, Benzoat, Formamidin, Cinnamat/Propenoat, aromatisches Propandion, Benzimidazol, cycloaliphatisches Keton, Formanilid, Cyanoacrylat, Benzopyranon, Salicylat oder eine mindestens eines der Vorangehenden umfassende Kombination umfasst.

13. Zusammensetzung nach irgendeinem oder mehreren der Ansprüche 1 bis 12, wobei die Zusammensetzung 0,5 bis 20 Gew.-% Titandioxid umfasst.

14. Zusammensetzung nach irgendeinem der Ansprüche 1 bis 13, ferner umfassend ein Verstärkungsmittel, wobei das Verstärkungsmittel vorzugsweise Glasfasern in einer Menge von 1 bis 200 Gewichtsteilen bezogen auf 100 Gewichtsteile der Polymere umfasst, wobei die Glasfasern eine runden oder flachen Querschnitt aufweisen.

15. Artikel, ausgewählt aus einem Formkörper, einem warmgeformten Artikel, einem extrudierten Film, einer extrudierten Folie, einem Schaumstoffartikel, einer oder mehreren Schichten eines mehrschichtigen Artikels, einem Substrat für einen beschichteten Artikel und einem Substrat für einen metallbeschichteten Artikel, umfassend die Zusammensetzung nach irgendeinem oder mehreren der Ansprüche 1 bis 14.

## Revendications

1. Composition thermoplastique comprenant, par rapport au poids total de la composition thermoplastique,
10 à 50 % en poids d'un poly(arylène éther-sulfone), ou d'une combinaison comprenant un poly(arylène éther-sulfone) et un poly(étherimide) ;
35 à 90 % en poids d'un poly(carbonate-siloxane),
0,5 à 25 % en poids d'un agent de compatibilité poly(carbonate-ester arylate), d'un agent de compatibilité poly(carbonate-ester arylate-siloxane), ou d'une combinaison comprenant au moins l'un des agents précédents, et
jusqu'à 15 % en poids d'un stabilisant vis-à-vis de la lumière ultraviolette ; dans lequel un échantillon de la composition a
une résistance au choc Izod sur barreau entaillé d'au moins 200 J/m à 23 °C, mesurée conformément à la norme ASTM D256 ; et
une valeur de résistance au choc Izod sur barreau entaillé supérieure de 40 % par rapport à la composition sans composant agent de compatibilité, mesurée conformément à la norme ASTM D256.

2. Composition selon la revendication 1, dans laquelle le poly(arylène éther-sulfone) est de formule
-Ar¹-SO₂-Ar²-O-
dans laquelle chaque Ar¹ et Ar² est identique ou différent, et est un groupe de formule 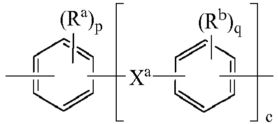 dans laquelle
c est 0 ou 1,
R^{a} et R^{b} sont chacun indépendamment un alkyle en C₁₋₁₀ linéaire ou ramifié, alcényle en C₂₋₁₀ linéaire ou ramifié, alcynyle en C₂₋₁₀ linéaire ou ramifié, aryle en C₆₋₁₈, alkylaryle en C₇₋₂₀, arylalkyle en C₇₋₂₀, cycloalkyle en C₅₋₁₀, cycloalcényle en C₅₋₂₀, alkylcarbonyle en C₁₋₁₀ linéaire ou ramifié, arylcarbonyle en C₆₋₁₈ halogène, nitro, cyano, un halogène, alcoxy en C₁₋₁₂ ou alkyle en C₁₋₁₂,
p et q sont chacun indépendamment des nombres entiers de 0 à 4, et
X^{a} est une simple liaison, -O-, -S-, -S(O)-, -S(O)₂-, -C(O)- ou un groupe organique en C₁₋₁₈.

3. Composition selon la revendication 2, dans laquelle le poly(arylène éther-sulfone) comprend des motifs de formule 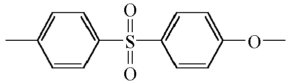 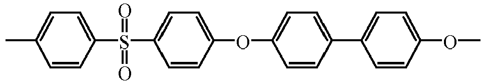 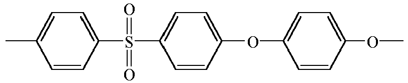 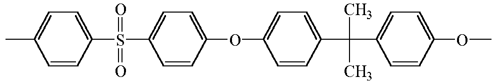 ou une combinaison comprenant au moins l'un des motifs précédents.

4. Composition selon l'une quelconque ou plusieurs des revendications 1 à 3, dans laquelle le polyétherimide comprend des motifs de formule 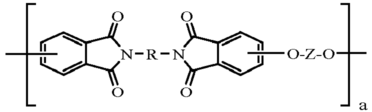 dans laquelle
R est un groupe hydrocarboné en C₂₋₂₀, et
Z est un groupe monocyclique ou polycyclique aromatique en C₆₋₂₄ éventuellement substitué par 1 à 6 groupes alkyle en C₁₋₈, 1 à 8 atomes d'halogène, ou une combinaison de ceux-ci, dans lequel les liaisons divalentes du groupe -O-Z-O- sont aux positions 3,3', 3,4', 4,3' ou 4,4'.

5. Composition selon la revendication 4, dans laquelle R est un groupe divalent de formule 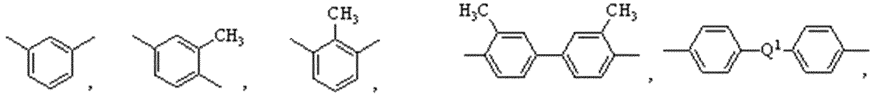 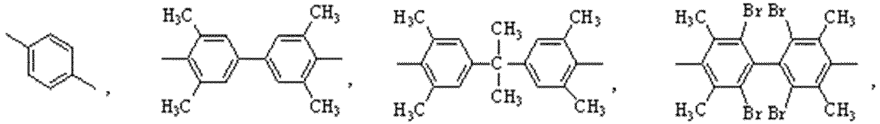 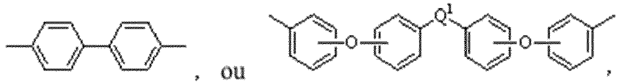 dans laquelle
Q¹ est -O-, -S-, -C(O)-, -SO₂-, -SO-, -C_{y}H_{2y}-, dans lequel y est un nombre entier de 1 à 5 ou un dérivé halogéné de celui-ci ou -(C₆H₁₀)_{z}- dans lequel z est un nombre entier de 1 à 4, et
Z est un groupe divalent de formule 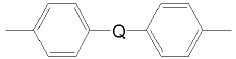 dans laquelle
Q est -O-, -S-, -C(O)-, -SO₂-, -SO- ou -C_{y}H_{2y}-, dans lequel y est un nombre entier de 1 à 5.

6. Composition selon l'une quelconque ou plusieurs des revendications 1 à 5, dans laquelle le poly(carbonate-siloxane) comprend
des motifs carbonate de bisphénol de formule 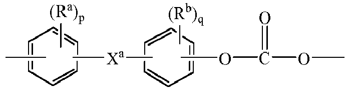 dans laquelle
R^{a} et R^{b} sont chacun indépendamment un alkyle en C₁₋₁₂, alcényle en C₁₋₁₂, cycloalkyle en C₃₋₈ ou alcoxy en C₁₋₁₂,
p et q sont chacun indépendamment 0 à 4, et
X^{a} est une simple liaison, -O-, -S-, -S(O)-, -S(O)₂-, -C(O)-, un alkylidène en C₁₋₁₁ de formule -C(R^{c})(R^{d})- dans laquelle R^{c} et R^{d} sont chacun indépendamment un atome d'hydrogène ou un alkyle en C₁₋₁₀, ou un groupe de formule -C(=R^{e})- dans laquelle R^{e} est un groupe hydrocarboné en C₁₋₁₀ divalent ; et
et des motifs polysiloxane de formule 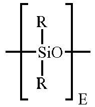 dans laquelle
chaque R est indépendamment un groupe hydrocarboné monovalent en C₁₋₁₃, et
E a une valeur moyenne de 2 à 200.

7. Composition selon l'une quelconque ou plusieurs des revendications 1 à 6, dans laquelle le poly(carbonate-ester arylate-siloxane) comprend des motifs de répétition carbonate de formule 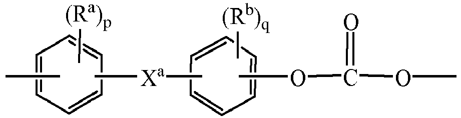 dans laquelle
R^{a} et R^{b} sont chacun indépendamment un alkyle en C₁₋₁₂,
p et q sont chacun indépendamment des nombres entiers de 0 à 4, et X^{a} est une simple liaison, -O-, -S-, -S(O)-, -S(O)₂-, -C(O)-, ou un groupe organique en C₁₋₁₈ ; et
des motifs ester arylate de formule 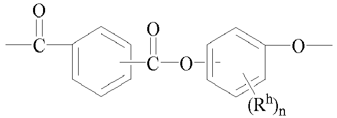 dans laquelle
chaque R^{h} est indépendamment un halogène ou un groupe hydrocarboné en C₁₋₁₀, et
n est 0 à 4 ; et
des motifs siloxane de formule 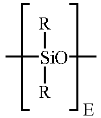 dans laquelle
chaque R est indépendamment un groupe hydrocarboné monovalent en C₁₋₁₃, et
E a une valeur moyenne de 2 à 500.

8. Composition selon l'une quelconque des revendications 6 à 7, dans laquelle les motifs siloxane dans le poly(carbonate-siloxane) et le poly(carbonate-ester arylate-siloxane) sont indépendamment de formule 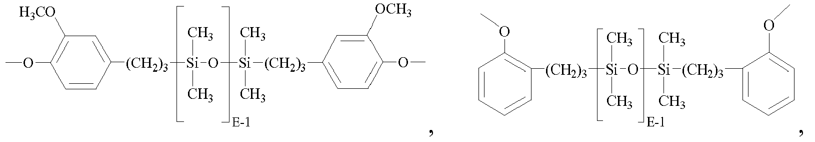 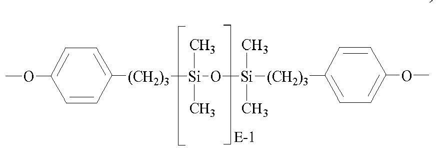 ou une combinaison comprenant au moins l'une des précédentes, dans laquelle E a une valeur moyenne de 2 à 200.

9. Composition selon l'une quelconque ou plusieurs des revendications 1 à 8, dans laquelle le poly(carbonate-ester arylate) comprend :
des motifs de répétition carbonate de formule 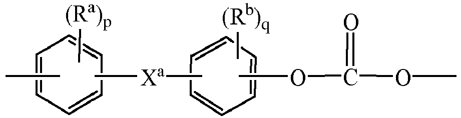 dans laquelle
R^{a} et R^{b} sont chacun indépendamment un alkyle en C₁₋₁₂,
p et q sont chacun indépendamment des nombres entiers de 0 à 4, et
X^{a} est une simple liaison, -O-, -S-, -S(O)-, -S(O)₂-, -C(O)-, ou un groupe organique en C₁₋₁₈ ; et
des motifs ester arylate de formule 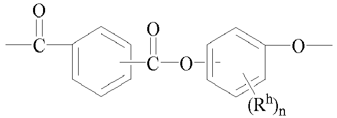 dans laquelle
chaque R^{h} est indépendamment un halogène ou un groupe hydrocarboné en C₁₋₁₀, et
n est 0 à 4.

10. Composition selon l'une quelconque ou plusieurs des revendications 1 à 9, comprenant en outre 0,1 à 10 % en poids d'un polymère fluoré, dans laquelle le polymère fluoré est éventuellement un polytétrafluoroéthylène.

11. Composition selon l'une quelconque ou plusieurs des revendications 1 à 10, comprenant en outre un adjuvant de traitement, un stabilisant thermique, un colorant, un ignifugeant ou une combinaison comprenant au moins l'un de ceux qui précèdent.

12. Composition selon l'une quelconque ou plusieurs des revendications 1 à 11, dans laquelle le stabilisant vis-à-vis de la lumière ultraviolette est présent en une quantité de 0,0001 à 15 % en poids, par rapport au poids total de la composition et dans laquelle le stabilisant vis-à-vis de la lumière ultraviolette comprend une benzophénone, une triazine, des benzoxazinones, un benzotriazole, un benzoate, une formamidine, un cinnamate/propénoate, une propanedione aromatique, un benzimidazole, une cétone cycloaliphatique, un formanilide, un cyanoacrylate, une benzopyranone, un salicylate, ou une combinaison comprenant au moins l'un de ceux qui précèdent.

13. Composition selon l'une quelconque ou plusieurs des revendications 1 à 12, dans laquelle la composition comprend 0,5 à 20 % en poids de dioxyde de titane.

14. Composition selon l'une quelconque des revendications 1 à 13, comprenant en outre un agent de renforcement, de préférence dans laquelle l'agent de renforcement comprend des fibres de verre en une quantité de 1 à 200 parties en poids par rapport à 100 parties en poids des polymères, dans laquelle les fibres de verre ont une section transversale ronde ou plate.

15. Article choisi parmi un article moulé, un article thermoformé, un film extrudé, une feuille extrudée, un article en mousse, une ou plusieurs couches d'un article multicouche, un substrat pour un article revêtu et un substrat pour un article métallisé comprenant la composition selon l'une quelconque ou plusieurs des revendications 1 à 14.
